(19) Europäisches Patentamt
European Patent Office
Office européen des brevets

(11) **EP 3 457 901 B1**

(12) **EUROPÄISCHE PATENTSCHRIFT**

(45) Veröffentlichungstag und Bekanntmachung des Hinweises auf die Patenterteilung:
**19.02.2020 Patentblatt 2020/08**

(21) Anmeldenummer: **17732728.5**

(22) Anmeldetag: **18.05.2017**

(51) Int Cl.:
***A47J 31/44*** *(2006.01)*

(86) Internationale Anmeldenummer:
**PCT/CH2017/000047**

(87) Internationale Veröffentlichungsnummer:
**WO 2017/197538 (23.11.2017 Gazette 2017/47)**

(54) **AUSGABEEINRICHTUNG FÜR EINE MILCHSCHÄUMVORRICHTUNG**

OUTLET DEVICE FOR A MILK FOAMER

DISPOSITIF DE SORTIE POUR UN DISPOSITIF DE MOUSSE DE LAIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.05.2016 EP 16405008**

(43) Veröffentlichungstag der Anmeldung:
**27.03.2019 Patentblatt 2019/13**

(73) Patentinhaber: **JURA Elektroapparate AG**
**4626 Niederbuchsiten (CH)**

(72) Erfinder:
• **BÜTTIKER, Philipp**
**4625 Oberbuchsiten (CH)**
• **KLEPZIG, Sandro**
**4612 Wangen bei Olten (CH)**

(74) Vertreter: **EGLI-EUROPEAN PATENT ATTORNEYS**
**Horneggstrasse 4**
**Postfach**
**8034 Zürich (CH)**

(56) Entgegenhaltungen:
**EP-A2- 2 397 219      WO-A1-2014/005228**
**DE-U1-202004 014 737    US-A1- 2009 285 955**

**Beschreibung**

Die vorliegende Erfindung betrifft eine Ausgabeeinrichtung für eine Milchschäumvorrichtung.

Geräte für die Zubereitung von Heissgetränken, insbesondere Kaffee-Zubereitungsautomaten weisen oft eine automatische oder halbautomatisch betreibbare Vorrichtung zum Zubereiten von Milchschaum auf. Insbesondere zur Zubereitung von Heissgetränken wie beispielsweise Cappuccino oder Latte Macchiato kann mittels einer derartigen Milchschäumvorrichtung der zusätzlich benötigte Milchschaum erzeugt und ausgegeben werden.

Es ist hierbei üblich, dass eine derartige Milchschäumvorrichtung Milch und gegebenenfalls Luft durch Ausnutzung des Venturi-Effekts ansaugt und die Milch und die Luft emulgiert, sodass eine Emulsion aus Milch und Luft (Milchschaum) entsteht. Beispielsweise kann in einem Bereich der Milchschäumvorrichtung heisser Dampf eingeleitet werden, sodass dieser Dampf an einem Milcheinlasskanal vorbeiströmt und dabei einen Unterdruck erzeugt, wobei infolge des Unterdrucks Milch durch einen Milcheinlasskanal aus einem Vorratsbehälter und gegebenenfalls Luft durch eine Lufteinlassöffnung angesaugt wird.

Derartige Milchschäumvorrichtungen weisen in Strömungsrichtung der aufzuschäumenden Milch gesehen eine Emulsionskammer und einen der Emulsionskammer nachgeordneten Ausgabebereich auf. Insbesondere in diesem Ausgabebereich ist oftmals eine Abbremseinrichtung zum Abbremsen des in der Emulsionskammer verwirbelten Fluids vorgesehen.

So ist aus der DE 20 2006 009 786 U1 eine Milchaufschäumvorrichtung bekannt, die eine Mischkammer stromabwärts einer Dampfzuleitung aufweist, wobei die Mischkammer weiterhin mit einer Milchzuleitung und einer Luftzuleitung oder mit einer Zuleitung für Milch und Luft in Verbindung steht. Durch Einleiten von Dampf in die Mischkammer werden entsprechend dem Venturi-Prinzip Luft und Milch in die Mischkammer angesaugt und in der Mischkammer mit Dampf zu einem Milch-Luft-Dampf-Gemisch (Milchschaum) vermischt. Um die Vermischung von Milch, Luft und Dampf zu verstärken und somit ein verstärktes Aufschäumen des Milch-Luft-Dampf-Gemischs zu bewirken, kann stromabwärts zur Mischkammer eine Emulsionskammer mit einer quer zur Strömungsrichtung angeordneten Prallplatte vorgesehen sein, sodass das aus der Mischkammer in die Emulsionskammer strömende Milch-Luft-Dampf-Gemisch auf die Prallplatte trifft. Damit der Milchschaum möglichst unbeeinträchtigt an seinen Bestimmungsort gelangen kann, sind Einlassöffnungen mehrerer Ausgabekanäle in der Prallplatte angeordnet. Bevorzugt erfolgt eine Gruppierung der Einlassöffnungen der Ausgabekanäle um die eigentliche Prallstelle herum, an welcher das in die Emulsionskammer strömende Milch-Luft-Dampf-Gemisch auf die Prallplatte trifft. Die Ausgabeöffnungen der Ausgabekanäle sind in einem Winkel zur Querschnittsebene des Ausgabekanals geneigt. Dadurch erfolgt bei allen Ausgabekanälen eine gleichartige Ablenkung des durch die jeweiligen Ausgabekanälen strömenden Milch-Luft-Dampf-Gemischs, sodass stromabwärts der Ausgabeöffnungen der Ausgabekanäle Milchschaum in Form eines definierten (einheitlichen) Gesamtstrahls propagiert.

Während des Milchaufschäumens nach dem Venturi-Prinzip entstehen jedoch immer wieder grössere Luftblasen. Milchschaum, welcher verhältnismässig grosse Luftblasen enthält, wird von Konsumenten meist als unschön wahrgenommen. Weiterhin ist Milchschaum, welcher verhältnismässig grosse Luftblasen enthält, in der Regel wenig sämig und entspricht deshalb hinsichtlich seiner Konsistenz nicht den Erwartungen vieler Konsumenten.

Das Dokument US 2009/285955 A1 beschreibt eine Ausgabeeinrichtung für Getränke, welche vor allem der Erzeugung von Getränken wie Kaffee und Espresso aus Pulver oder einem Flüssigkonzentrat dient. Diese Ausgabeeinrichtung ist auch zur Erzeugung von Getränken auf der Basis von Milch (hergestellt aus Milchpulver) und insbesondere zur Erzeugung von Milchschaum geeignet. Das Pulver oder Konzentrat wird mit Wasser vermischt und mittels einer Rühr- bzw. Schlageinrichtung 26 zu einem Endprodukt verarbeitet ("geschlagen"). Hinter der Rühr- bzw. Schlageinrichtung 26 ist ein Sieb 188 vorgesehen, welches ein von der Ausgabeeinrichtung auszugebendes Getränk passieren muss (Fig. 6-8 und Absatz [0045] des Dokuments US 2009/285955 A1). Das Sieb 188 soll grosse Schaumblasen zu kleinen Schaumblasen machen. Das Sieb 188 umfasst mehrere Durchtrittskanäle 189 für das auszugebende Getränk, wobei ein hydraulischer Durchmesser 193 der Durchtrittskanäle im Bereich 0.2 bis 1.0 mm liegt und eine Länge 185 der Durchtrittskanäle im Bereich von 0.1 bis 1.0 mm liegt.

Das Dokument EP 2 397 219 A2 betrifft eine Vorrichtung zum Schäumen einer Flüssigkeit wie etwa von Milch mit einem porösen Körper, der als Sieb wirkt, zur Verfeinerung des Milchschaums. Die Porenweite beträgt etwa 70 bis 100 Mikrometer. Alternativ sind zwei Siebe aus versilbertem Draht vorgesehen, die eine Maschenweite von 0.3 bis 0.4 mm aufweisen.

Zusätzlich wird bei Geräten, welche zwar eine Milchaufschäumeinheit aufweisen, aber nicht mit einem separaten Heisswasserauslauf ausgestattet sind, die jeweilige Milchaufschäumeinheit häufig auch zur Abgabe von Heisswasser verwendet, indem das Heisswasser durch die Milchaufschäumeinheit hindurch abgegeben wird. Dabei kann zusätzliche Luft angesaugt werden, mit dem Ergebnis, dass kein stabiler Wasserstrahl entstehen kann. Zusätzlich kann der Wasserstrahl zu schnell aus der Milchaufschäumeinheit ausgegeben werden, wodurch Wasserspritzer in der Umgebung der Milchaufschäumeinheit entstehen.

Der vorliegenden Erfindung liegt daher die Aufgabe zugrunde, eine verbesserte Ausgabeeinrichtung für eine Milchschäumvorrichtung anzugeben, bei welcher der Milchschaum möglichst homogen und möglichst feinporig ist und welche eine Ausgabe von Heisswasser ermöglicht, bei der eine Ausbildung von Wasserspritzern in der Umgebung der Ausgabeeinrichtung weitgehend vermieden wird.

Die Aufgabe wird gelöst durch eine Ausgabeeinrichtung für eine Milchschäumvorrichtung mit den Merkmalen des unabhängigen Patentanspruchs 1.

Die Ausgabeeinrichtung für eine Milchschäumvorrichtung umfasst eine Emulsionskammer mit einem Fluid-Einlass zum Einlassen eines Milch, Luft und/oder Dampf enthaltenden Fluids in die Emulsionskammer, welches Fluid in der Emulsionskammer zu einem emulgierten Fluid in Form von Milchschaum emulgiert, und einen Ausgabebereich mit einer Ausgabeöffnung zum Ausgeben des emulgierten Fluids aus der Emulsionskammer, welcher Ausgabebereich mindestens einen Ausgabekanal aufweist, der mit der Emulsionskammer und der Ausgabeöffnung in Fluidverbindung steht, sodass das emulgierte Fluid aus der Emulsionskammer durch den mindestens einen Ausgabekanal zur Ausgabeöffnung strömen kann. Im Ausgabebereich ist ausserdem eine Prallfläche und/oder mindestens ein Prallkörper zum Abbremsen und Verwirbeln des in die Emulsionskammer eingelassenen Fluids angeordnet.

Gemäss der Erfindung ist eine Siebkörper-Anordnung mit mindestens einem Siebkörper vorhanden, welcher mehrere Durchtrittskanäle umfasst und stromaufwärts der Ausgabeöffnung angeordnet ist, sodass von der Emulsionskammer zur Ausgabeöffnung strömendes emulgiertes Fluid den mindestens einen Siebkörper via mindestens einen der Durchtrittskanäle passieren muss, wobei ein hydraulischer Durchmesser der Durchtrittskanäle im Bereich von 0.1 bis 1.5 mm liegt und eine Länge der Durchtrittskanäle im Bereich von 0.1 bis 1.5 mm liegt. Weiterhin sind die Durchtrittskanäle des mindestens einen Siebkörpers in einem Raumbereich angeordnet, welcher sich ringförmig um die Prallfläche und/oder den mindestens einen Prallkörper erstreckt.

Eine Definition des Begriffs "hydraulischer Durchmesser" ist im Folgenden angegeben.

In diesem Zusammenhang bezeichnet "emulgiertes Fluid in Form von Milchschaum" eine Emulsion von Milch und Luft, d.h. eine räumlich verteilte Mischung aus Milchtropfen und Luftblasen. Dementsprechend ist die Emulsionskammer der Ausgabeeinrichtung dazu geeignet, ein Milch, Luft und/oder Dampf enthaltendes Fluid (beispielsweise ein Milch-Luft-Dampf-Gemisch oder ein Milch-Luft-Dampf-Gemisch) aufzunehmen, wobei durch eine Vermischung oder Verwirbelung der Bestandteile dieses Fluid in der Emulsionskammer schliesslich eine Emulsion aus Milch und Luft (Milchschaum) entsteht.

Dadurch, dass im Ausgabebereich eine Prallfläche und/oder mindestens ein Prallkörper angeordnet ist und die Durchtrittskanäle des mindestens einen Siebkörpers in einem Raumbereich angeordnet sind, welcher sich ringförmig um die Prallfläche und/oder den mindestens einen Prallkörper erstreckt, wird erreicht, dass ein durch den Fluid-Einlass eingelassenes Fluid in der Regel an der Prallfläche und/oder dem Prallkörper abgebremst und in der Emulsionskammer verwirbelt wird, bevor das eingelassene Fluid den Siebkörper via mindestens einen der Durchtrittskanäle durchströmen und zur Ausgabeöffnung gelangen kann.

Enthält das eingelassen Fluid beispielsweise Milch, Luft und/oder Dampf, dann fördert die von der Prallfläche und/oder dem Prallkörper verursachte Abbremsung und Verwirbelung eine Durchmischung der Milch mit Luft und/oder Dampf und somit die Ausbildung einer Emulsion mit einer räumlich verteilten Mischung aus Milchtropfen und Luftblasen.

Die Abbremsung des eingelassenen Fluids in der Emulsionskammer hat zudem den Effekt, dass das Fluid die Durchtrittskanäle des Siebkörpers und die Ausgabeöffnung mit einer reduzierten Strömungsgeschwindigkeit durchströmt. Eine derartige Abbremsung des eingelassenes Fluid ist auch vorteilhaft, wenn die Ausgabeeinrichtung zur Ausgabe von Heisswasser verwendet wird, d.h. wenn Heisswasser das in die Emulsionskammer eingelassene Fluid bildet. Wird Heisswasser in die Emulsionskammer eingelassen, so ist eine Verwirbelung und Abbremsung des eingelassenen Heisswassers an der Prallfläche und/oder dem Prallkörper eine Voraussetzung dafür, dass das Heisswasser die Ausgabeöffnung mit einer geringen Geschwindigkeit erreicht und das Entstehen von Wasserspritzern in der Umgebung der Ausgabeöffnung weitgehend vermieden werden kann.

Dadurch, dass die Durchtrittskanäle des mindestens einen Siebkörpers in einem Raumbereich angeordnet sind, welcher sich ringförmig um die Prallfläche und/oder den mindestens einen Prallkörper erstreckt, wird erreicht, dass ein in die Emulsionskammer eingeleitetes Fluid mittels der Prallfläche bzw. des Prallkörpers im Wesentlichen über alle den Prallfläche und/oder den mindestens einen Prallkörper umgebenden Bereiche des Siebkörpers und insbesondere über alle den Prallfläche und/oder den mindestens einen Prallkörper ringförmig umgebenden Durchtrittskanäle im Wesentlichen gleichmässig verteilt wird.

Die Siebkörper-Anordnung hat den Effekt, dass eine Emulsion aus Milch und Luft, welche sich in der Emulsionskammer befindet, die Ausgabeöffnung der Ausgabeeinrichtung über den mindestens einen Ausgabekanal nur erreichen kann, wenn diese Emulsion den mindestens einen Siebkörper der Siebkörper-Anordnung via einen oder mehrere der Durchtrittskanäle des mindestens einen Siebkörpers passiert. Mit anderen Worten, die Emulsion muss einen oder mehrere Durchtrittskanäle des mindestens einen Siebkörpers ebenfalls durchströmen.

Der mindestens eine Siebkörper hat insbesondere den Effekt, dass der Siebkörper eine durch den mindestens einen Ausgabekanal strömende Emulsion hinsichtlich ihres Strömungsprofils (d.h. hinsichtlich der räumlichen Verteilung der Strömungsgeschwindigkeit) beeinflusst. Da die Emulsion den Siebkörper via die Durchtrittskanäle passiert, kann die Emulsion den Siebkörper nicht mit einer räumlich konstanten Strömungsgeschwindigkeit passieren. Bedingt durch die Anordnung der Durchtrittskanäle in dem mindestens einen Siebkörper durchströmt die Emulsion den Siebkörper vielmehr mit einer Strömungsgeschwindigkeit, welche (abhängig von der Anordnung der Durchtrittskanäle) räumlich variiert. In der Regel ist die räumliche Variation der Strömungsgeschwindigkeit derart ausgebildet, dass die Strömungsgeschwindigkeit einen Geschwindigkeitsgradienten aufweist. Bedingt durch die Anordnung der Durchtrittskanäle in dem mindestens einen Siebkörper ist die räumliche Variation der Strömungsgeschwindigkeit in der Regel derart ausgebildet, dass die Strömungsgeschwindigkeit einen Geschwindigkeitsgradienten aufweist, welcher ebenfalls als Funktion des Ortes variiert, insbesondere in den Durchtrittskanälen oder in der Nähe der jeweiligen Durchtrittskanäle stromaufwärts und/oder stromabwärts des mindestens einen Siebkörpers.

Durchströmt eine Emulsion aus Milch und Luft den mindestens einen Siebkörper, so können die in der Emulsion enthaltenen Milchtropfen und Luftblasen infolge des oben genannten Geschwindigkeitsgradienten der Strömungsgeschwindigkeit deformiert werden. Die jeweiligen Milchtropfen und Luftblasen können dabei (abhängig vom jeweiligen Geschwindigkeitsgradienten) derart stark deformiert werden, dass ein einzelner Milchtropfen in zwei oder mehr Milchtropfen geteilt wird, welche jeweils ein geringeres Volumen aufweisen als der jeweilige einzelne Milchtropfen vor seiner Teilung in mehrere Milchtropfen, und dass entsprechend eine einzelne Luftblase in zwei oder mehr Luftblasen geteilt wird, welche jeweils ein geringeres Volumen aufweisen als die jeweilige einzelne Luftblase vor ihrer Teilung in mehrere Luftblasen.

Eine derartige Teilung einzelner Milchtropfen in jeweils mehrere kleinere Milchtropfen bzw. eine derartige Teilung einzelner Luftblasen in jeweils mehrere kleinere Luftblasen tritt vorzugsweise in Bereichen der Emulsion auf, in denen der Geschwindigkeitsgradient der Strömungsgeschwindigkeit im Wesentlichen parallel zur Strömungsgeschwindigkeit gerichtet ist. In den Bereichen der Emulsion, in denen die Strömungsgeschwindigkeit der Emulsion derart ausgebildet ist, dass der Geschwindigkeitsgradient der Strömungsgeschwindigkeit im Wesentlichen parallel zur Strömungsgeschwindigkeit gerichtet ist, liegt in der Regel eine "Dehnströmung" vor. Diese Dehnströmung bewirkt, dass Milchtropfen bzw. Luftblasen (wegen des Geschwindigkeitsgradienten der Strömungsgeschwindigkeit) besonders stark in Richtung der Strömungsgeschwindigkeit gedehnt werden und besonders effizient in kleinere Milchtropfen bzw. kleinere Luftblasen geteilt werden können. Derartige Dehnströmungen treten insbesondere in jedem der Durchtrittskanäle des mindestens einen Siebkörpers auf, welches die Emulsion durchströmt, wobei diese Dehnströmungen in der Regel entlang den zentralen Längsachsen der Durchtrittskanäle besonders stark ausgeprägt sind. Dementsprechend können Milchtropfen bzw. Luftblasen, welche einen Durchtrittskanal im Wesentlichen in der "Mitte" (bezogen auf einen Querschnitt des jeweiligen Durchtrittskanals) durchströmen, besonders stark in der Strömungsrichtung gedehnt und gegebenenfalls in mehrere kleinere Milchtropfen bzw. Luftblasen geteilt werden.

In welchem Masse Milchtropfen bzw. Luftblasen der Emulsion beim Durchströmen der Durchtrittskanäle des mindestens einen Siebkörpers in kleinere Milchtropfen bzw. kleinere Luftblasen geteilt werden können, hängt dabei von den räumlichen Abmessungen der jeweiligen Durchtrittskanäle ab. Es wird vorgeschlagen, die Durchtrittskanäle des mindestens einen Siebkörpers derart auszubilden, dass die Durchtrittskanäle jeweils einen hydraulischen Durchmesser im Bereich von 0.1 bis 1.5 mm und eine Länge im Bereich von 0.1 bis 1.5 mm aufweisen.

Auf diese Weise hat der Siebkörper vorteilhafterweise den Effekt, dass eine in der Emulsionskammer gebildete und den Siebkörper passierende Emulsion aus Milch und Luft die Ausgangsöffnung der Ausgabeeinrichtung in Form von Milchschaum verlassen kann, welcher eine besonders homogen verteilte Mischung von besonders kleinen Milchtropfen und Luftblasen enthält, und somit einen Milchschaum bildet, welcher gleichmässig ausgebildete und extrem feine Poren aufweist und keine grossen Luftblasen enthält, sodass dieser Milchschaum von Konsumenten als äusserst sämig und optisch ansprechend wahrgenommen wird.

Die Ausgaberichtung ist auch vorteilhaft, wenn Heisswasser über die Emulsionskammer und die Ausgabeöffnung ausgegeben werden soll. In diesem Fall bewirkt der Siebkörper, dass das von der Emulsionskammer über den mindestens einen Ausgabekanal zur Ausgabeöffnung strömende Wasser - zusätzlich zu der Abbremsung, welche die Prallfläche und/oder der Prallkörper in der Emulsionskammer verursacht - abgebremst und gleichmässig im Ausgabekanal verteilt wird. Dadurch entsteht in der Ausgabeöffnung ein kompakter Wasserstrahl, wobei das Entstehen von Wasserspritzern in der Umgebung der Ausgabeöffnung vermieden wird.

Bei einer Ausführungsform der Ausgabeeinrichtung ist die Prallfläche und/oder der mindestens eine Prallkörper in einem zentralen Bereich der Ausgabeöffnung angeordnet. Diese zentrale Anordnung der Prallfläche und/oder des mindestens eine Prallkörpers ermöglicht eine besonders gleichmässige Verteilung eines in die Emulsionskammer eingeleiteten Fluids über die in dem mindestens einen Siebkörper ausgebildeten Durchtrittskanäle.

Auf diese Weise hat der Siebkörper vorteilhafterweise den Effekt, dass eine in der Emulsionskammer gebildete und den Siebkörper passierende Emulsion aus Milch und Luft die Ausgangsöffnung der Ausgabeeinrichtung in Form von Milchschaum verlassen kann, welcher eine besonders homogen verteilte Mischung von Milchtropfen und Luftblasen enthält, und somit einen Milchschaum bildet, welcher gleichmässig ausgebildete Poren aufweist.

Gemäss einer Ausführungsform der Ausgabeeinrichtung ist der mindestens eine Siebkörper derart angeordnet, dass er im Wesentlichen quer zur Strömungsrichtung des emulgierten Fluids im Ausgabekanal steht. In diesem Fall wird das emulgierte Fluid besonders gleichmässig über eine Mehrzahl von Durchtrittskanälen verteilt, sodass das emulgierte Fluid den Siebkörper derart passiert, dass das emulgierte Fluid den Austrittskanal im Wesentlichen gleichmässig (bezogen auf eine Querschnittsfläche des Austrittskanals) durchströmt.

Weiterhin kann der mindestens eine Siebkörper stromaufwärts der Ausgabeöffnung in einem Abstand zur Ausgabeöffnung angeordnet sein. In diesem Fall muss das von der Emulsionskammer zur Ausgabeöffnung strömende emulgierte Fluid stromabwärts des Siebkörpers den Ausgabekanal noch über eine bestimmte Distanz durchströmen, bevor es die Ausgabeöffnung erreicht. Auf diese Weise wird das zur Ausgabeöffnung strömende emulgierte Fluid nach Passieren des Siebkörpers im Ausgabekanal über eine bestimmte Distanz geführt. Dies hat den Effekt, dass das emulgierte Fluid durch die Austrittsöffnung in einem Strahl propagiert, welcher relativ stabil in eine vorgegebene Richtung gerichtet ist, sodass Fluktuationen des Strahls zur Seite hin weitgehend vermieden werden.

Der mindestens eine Siebkörper kann beispielsweise in der Emulsionskammer, an einem von der Ausgabeöffnung abgewandten Ende des mindestens einen Ausgabekanals oder in dem mindestens einen Ausgabekanal angeordnet sein.

Die Eigenschaften des aus der Ausgabeöffnung austretenden emulgierten Fluids (Milchschaum) können durch eine geeignete Ausbildung der Durchtrittskanäle des mindestens einen Siebköpers auf vorteilhafte Weise beeinflusst und somit optimiert werden. Insbesondere besteht die Möglichkeit, die Anzahl der Durchtrittskanäle, die Anordnung der Durchtrittskanäle und die geometrischen Abmessungen der Durchtrittskanäle geeignet zu wählen.

Beispielsweise können die Durchtrittskanäle des mindestens einen Siebkörpers hinsichtlich eines Querschnitts der jeweiligen Durchtrittskanäle so gestaltet sein, dass der hydraulische Durchmesser der Durchtrittskanäle bevorzugt im Bereich von 0.1 bis 1.0 mm, insbesondere im Bereich von 0.3 bis 0.9 mm liegt. Weiterhin können die Durchtrittskanäle des mindestens einen Siebkörpers hinsichtlich einer Länge der jeweiligen Durchtrittskanäle so gestaltet sein, dass die Länge der Durchtrittskanäle bevorzugt im Bereich von 0.15 bis 1.0 mm, insbesondere im Bereich von 0.15 bis 0.9 mm liegt. Diese Wahl der Abmessungen der Durchtrittskanäle ist zweckmässig, um zu erreichen, dass einerseits eine akzeptable Menge emulgiertes Fluid pro Zeiteinheit durch die jeweiligen Durchtrittskanäle fliessen kann und andererseits die im emulgierten Fluid enthaltenen Milchtropfen bzw. Luftblasen beim Passieren eines der Durchtrittskanäle effektiv in kleinere Milchtropfen bzw. Luftblasen geteilt werden können (bedingt durch die Ausbildung von Dehnströmungen in den jeweiligen Durchtrittskanälen).

Beispielsweise können die Durchtrittskanäle des mindestens einen Siebkörpers so gestaltet sein, dass das Verhältnis des hydraulischen Durchmessers zur Länge der Durchtrittskanäle grösser als 1:1.5, bevorzugt grösser als 1:1.25 und kleiner als 4:1, insbesondere grösser als 1:1.25 und kleiner als 3:1 ist. Auf diese Weise ist gewährleistet, dass sich über einen relativ grossen Bereich der jeweils vom emulgierten Fluid durchströmten Durchtrittskanäle Dehnströmungen ausbilden, welche geeignet sind, die im emulgierten Fluid enthaltenen Milchtropfen bzw. Luftblasen beim Passieren eines der Durchtrittskanäle effektiv in kleinere Milchtropfen bzw. Luftblasen zu teilen.

Weiterhin kann der mindestens eine Siebkörper derart ausgebildet sein, dass die Anzahl der Durchtrittskanäle mindestens 10, bevorzugt 20 bis 300, besonders bevorzugt 25 bis 200, insbesondere 30 bis 160 beträgt. Dadurch, dass der Siebkörper eine relativ grosse Zahl von Durchtrittskanälen aufweist, besteht die Möglichkeit, die Durchtrittskanäle im Wesentlichen gleichmässig verteilt (bezogen auf eine Oberfläche des Siebkörpers) anzuordnen. Dadurch wird erreicht, dass das emulgierte Fluid nach dem Passieren des mindestens eines Siebkörpers (bezogen auf einen Querschnitt des mindestens einen Ausgabekanals) sehr homogen ist, insbesondere im Hinblick auf die Grösse und die räumliche Verteilung der Milchtropfen bzw. Luftblasen in dem durch den Ausgabekanal strömenden Fluid.

Der mindestens eine Siebkörper kann beispielsweise als plattenförmiger, mit durchgehenden Löchern versehener Körper ausgebildet sein, wobei die durchgehenden Löcher die jeweiligen Durchtrittskanäle bilden. Alternativ kann der Siebkörper als Gitterstruktur, z.B. als Gewebe oder Geflecht aus sich kreuzenden Metalldrähten oder Fasern (vorzugsweise aus Kunststoff), ausgebildet sein, wobei die Durchtrittskanäle "maschenförmig" ausgestaltet sind, d.h. jeweils zwischen miteinander maschenförmig verbundenen Metalldrähten oder Fasern ausgebildet sind. Die Durchtrittskanäle können dabei vorzugsweise (aber nicht notwendigerweise) rund oder eckig (z.B. dreieckig, viereckig oder mehreckig) ausgebildet sein.

Der mindestens eine Siebkörper der Siebkörper-Anordnung 70 kann beispielsweise ein flacher, planar ausgebildeter Körper sein, welcher sich (zumindest in einem Bereich, in dem die Durchtrittskanäle angeordnet sind) entlang einer Ebene erstreckt. Der Siebkörper kann selbstverständlich andere Formen aufweisen. Beispielsweise kann der jeweilige Siebkörper zumindest in einem Bereich, in dem die Durchtrittskanäle angeordnet sind, als eine Struktur ausgebildet sein, welche gekrümmt oder gewölbt ist oder sich entlang der Kontur (oder zumindest eines Bereichs der Kontur) eines Zylinders, eines Kegels, eines Kegelstumpfes, eines Würfels, eines Quaders, eines Tetraeders oder dergleichen erstreckt.

Weiterhin können die Durchtrittskanäle des mindestens einen Siebkörpers derart angeordnet sein, dass zwei benachbarte Durchtrittskanäle relativ zueinander in einem Abstand von 0.1 bis 1.5 mm, bevorzugt in einem Abstand von 0.1 bis 1.0 mm, insbesondere in einem Abstand von 0.3 bis 0.9 mm, angeordnet sind. Auf diese Weise wird erreicht, dass die Durchtrittskanäle relativ dicht nebeneinander angeordnet sind. Demzufolge kann eine relativ grosse Menge emulgiertes Fluid pro Zeiteinheit durch die jeweiligen Durchtrittskanäle fliessen und - im Wesentlichen homogen über den Querschnitt des Austrittskanals verteilt - den Austrittskanal durchströmen.

Bei einer weiteren Ausführungsform der Ausgabeeinrichtung umfasst die Siebkörper-Anordnung mindestens zwei (oder mehr als zwei) Siebkörper. Die jeweiligen Siebkörper sind dabei jeweils in Strömungsrichtung des emulgierten Fluids hintereinander angeordnet, sodass das emulgierte Fluid die einzelnen Siebkörper der Siebkörper-Anordnung jeweils nacheinander passiert (via die Strömungskanäle der einzelnen Siebkörper der Siebkörper-Anordnung).

In diesem Fall werden die im emulgierten Fluid enthaltenen Milchtropfen bzw. Luftblasen beim Durchströmen der Durchtrittskanäle des ersten Siebkörpers der Siebkörper-Anordnung, welcher von dem emulgierten Fluid zuerst passiert wird, in kleinere Milchtropfen bzw. Luftblasen geteilt. Diese kleineren Milchtropfen bzw. Luftblasen können anschliessend beim Durchströmen der Durchtrittskanäle des nächsten Siebkörpers, welcher von dem emulgierten Fluid nach dem Passieren des ersten Siebkörpers passiert wird, wieder derart stark deformiert werden, dass sie in noch kleinere Milchtropfen bzw. Luftblasen geteilt werden. Durchströmt demnach das emulgierte Fluid mehrere Siebkörper nacheinander, entsteht somit ein Milchschaum, im welchem besonders kleine Milchtropfen und Luftblasen besonders fein verteilt sind und welcher deshalb besonders kleine Poren aufweist.

Eine Siebkörper-Anordnung mit mindestens zwei (oder mehr als zwei) Siebkörper ist auch vorteilhaft, wenn die Ausgabeeinrichtung zur Ausgabe von Heisswasser verwendet wird, d.h. wenn Heisswasser das in die Emulsionskammer eingelassene Fluid bildet. Eine Anordnung von mindestens zwei (oder mehr als zwei) Siebkörpern ist eine Voraussetzung dafür, dass das Heisswasser die Ausgabeöffnung mit einer besonders geringen Geschwindigkeit erreichen kann und das Entstehen von Wasserspritzern in der Umgebung der Ausgabeöffnung besonders effektiv vermieden werden kann.

Vorzugsweise sind jeweils zwei Siebkörper der Siebkörper-Anordnung, welche in Strömungsrichtung des emulgierten Fluids hintereinander angeordnet sind, derart angeordnet, dass sie in Strömungsrichtung des emulgierten Fluids einen Abstand relativ zueinander aufweisen. Dieser Abstand kann beispielsweise im Bereich von 0.1 bis 20 mm, bevorzugt im Bereich von 0.5 bis 10 mm, insbesondere im Bereich von 0.9 bis 5 mm liegen. Auf diese Weise wird erreicht, dass jeweils zwischen zwei Siebkörpern der Siebkörper-Anordnung, welche in Strömungsrichtung des emulgierten Fluids hintereinander angeordnet sind, ein Zwischenraum vorhanden ist, in dem das in diesem Raumbereich durch einen der zwei Siebkörper strömende emulgierte Fluid einerseits durchwirbelt wird und andererseits durch das andere der zwei Siebkörper derart abgebremst wird, dass sich die Strömung des emulgierten Fluids im Zwischenraum zwischen den zwei Siebkörpern beruhigen kann. Dies fördert eine Homogenisierung des emulgierten Fluids im Zwischenraum zwischen den zwei Siebkörpern, sodass eine Emulsion mit einer besonders gleichmässigen räumlichen Verteilung von Milchtropfen und Luftblasen entsteht.

Bei einer weiteren Ausführungsform der Ausgabeeinrichtung ist zwischen dem Fluid-Einlass der Emulsionskammer und der Ausgabeöffnung eine Prallfläche und/oder mindestens ein Prallkörper zum Abbremsen und Verwirbeln des in die Emulsionskammer eingelassenen Fluids angeordnet ist. Ein derartiges Abbremsen bzw. Verwirbeln ist zur Bildung eines organoleptisch optimalen Milchschaums vorteilhaft. Die Durchtrittskanäle sind dabei vorzugsweise in einem Raumbereich angeordnet sind, welcher sich ringförmig um die Prallfläche und/oder den mindestens einen Prallkörper erstreckt. In diesem Fall kann sich die Prallfläche und/oder der mindestens eine Prallkörper beispielsweise in einer zentralen Position im Ausgabebereich der Ausgabeeinrichtung befinden, während das emulgierte Fluid durch einen sich ringförmig um die Prallfläche und/oder den mindestens einen Prallkörper erstreckenden Raumbereich an der Prallfläche bzw. an dem Prallkörper vorbei zur Austrittsöffnung strömen kann.

Gemäss einem weiteren Aspekt der Erfindung ist es vorgesehen, dass die Emulsionskammer einen ersten Emulsionskammerabschnitt, einen zweiten Emulsionskammerabschnitt und einen Verbindungskanal, welcher eine Fluidverbindung zwischen dem ersten Emulsionskammerabschnitt und dem zweiten Emulsionskammerabschnitt bildet, umfasst, wobei der erste Emulsionskammerabschnitt an den Fluid-Einlass grenzt und der mindestens eine Ausgabekanal im Bereich des zweiten Emulsionskammerabschnitts in die Emulsionskammer mündet. In diesem Fall muss ein durch den Fluid-Einlass in die Emulsionskammer eingelassenes Fluid zunächst den ersten Emulsionskammerabschnitt und anschliessend nacheinander den Verbindungskanal und den zweiten Emulsionskammerabschnitt durchströmen. Der Verbindungskanal weist hierbei - in Strömungsrichtung des Fluides gesehen - einen Querschnitt auf, welcher kleiner als die entsprechenden Querschnitte des ersten Emulsionskammerabschnitts bzw. des zweiten Emulsionskammerabschnitts ist.

Diese Ausbildung der Emulsionsammer hat den Effekt, dass ein emulgiertes Fluid nacheinander den ersten Emulsionskammerabschnitt, den Verbindungkanal und schliesslich den zweiten Emulsionskammerabschnitt durchströmen muss, bevor es den Ausgabekanal erreicht. Im vorliegenden Fall kann ein emulgiertes Fluid aus Milch und Luft derart durch die Emulsionskammer strömen, dass sich im Verbindungskanal zwischen dem ersten Emulsionskammerabschnitt und dem zweiten Emulsionskammerabschnitt eine Dehnströmung ausbildet, welche bewirkt, dass im emulgierten Fluid enthaltene Milchtropfen bzw. Luftblasen beim Durchströmen des Verbindungskanals in kleinere Milchtropfen bzw. Luftblasen geteilt werden. Auf diese Weise bildet sich im zweiten Emulsionskammerabschnitt der Emulsionskammer eine Emulsion, welche Milchtropfen und Luftblasen enthält, die bereits relativ klein sind, bevor diese Emulsion den mindestens einen Siebkörper der Siebkörper-Anordnung passiert. Durchströmt nun diese Emulsion anschliessend den mindestens einen Siebkörper der Siebkörper-Anordnung, werden die in der Emulsion enthaltenen Milchtropfen bzw. Luftblasen beim Passieren des mindestens einen Siebkörpers nochmals in kleinere Milchtropfen bzw. Luftblasen geteilt. Durchströmt demnach das emulgierten Fluid zunächst über den Verbindungskanal in den zweiten Emulsionskammerabschnitt der Emulsionskammer und passiert anschliessend den mindestens einen Siebkörper, entsteht somit ebenfalls ein Milchschaum, im welchem besonders kleine Milchtropfen und Luftblasen besonders fein verteilt sind und welcher deshalb besonders kleine Poren aufweist. Eine zusätzliche Verkleinerung der Milchtropfen bzw. Luftblasen kann erzielt werden, falls die Siebkörper-Anordnung - wie oben beschrieben - mindestens zwei (oder mehr als zwei) Siebkörper aufweist und die Emulsion alle Siebkörper der Siebkörper passieren muss, um die Ausgabeöffnung der Ausgabeeinrichtung zu erreichen.

Eine Milchschäumvorrichtung zum Aufschäumen von Milch kann beispielsweise eine Ausgabeeinrichtung der vorstehend genannten Art und eine Einrichtung zum Einlassen von Milch, Luft und/oder Dampf in die Emulsionskammer der Ausgabeeinrichtung umfassen.

Im Folgenden wird eine bevorzugte Ausführungsform der erfindungsgemässen Ausgabeeinrichtung für eine Milchschäumvorrichtung und eine mit einer erfindungsgemässen Ausgabeeinrichtung ausgestattete Milchschäumvorrichtung anhand einer Zeichnung erläutert. Es zeigen:

Fig. 1:     einen Längsschnitt durch eine Milchschäumvorrichtung mit einer ersten Ausführungsform der Ausgabeeinrichtung;

Fig. 2A:    ein unteres Teil der Ausgabeeinrichtung gemäss Figur 1, in einem Längsschnitt;

Fig. 2B:    eine Draufsicht von oben auf das untere Teil der Ausgabeeinrichtung gemäss Fig. 2A;

Fig. 2C:    eine Draufsicht von unten auf das untere Teil der Ausgabeeinrichtung gemäss Fig. 2A;

Fig. 3:     einen Längsschnitt durch eine zweite Ausführungsform der Ausgabeeinrichtung;

Fig. 4A:    ein unteres Teil der Ausgabeeinrichtung gemäss Figur 3, in einem Längsschnitt;

Fig. 4B:    eine Draufsicht von oben auf das untere Teil der Ausgabeeinrichtung gemäss Fig. 4A;

Fig. 4C:    eine Draufsicht von unten auf das untere Teil der Ausgabeeinrichtung gemäss Fig. 4A;

Fig. 5:     einen Längsschnitt durch eine dritte Ausführungsform der Ausgabeeinrichtung;

Fig. 6A:    eine Draufsicht von oben auf ein unteres Teil der Ausgabeeinrichtung gemäss Fig. 5;

Fig. 6B:    eine Draufsicht von unten auf das untere Teil der Ausgabeeinrichtung gemäss Fig. 5;

Fig. 7:     eine Draufsicht von oben auf eine weitere Ausführungsform eines unteren Teils der Ausgabeeinrichtung;

Fig. 8:     einen Längsschnitt durch eine vierte Ausführungsform der Ausgabeeinrichtung.

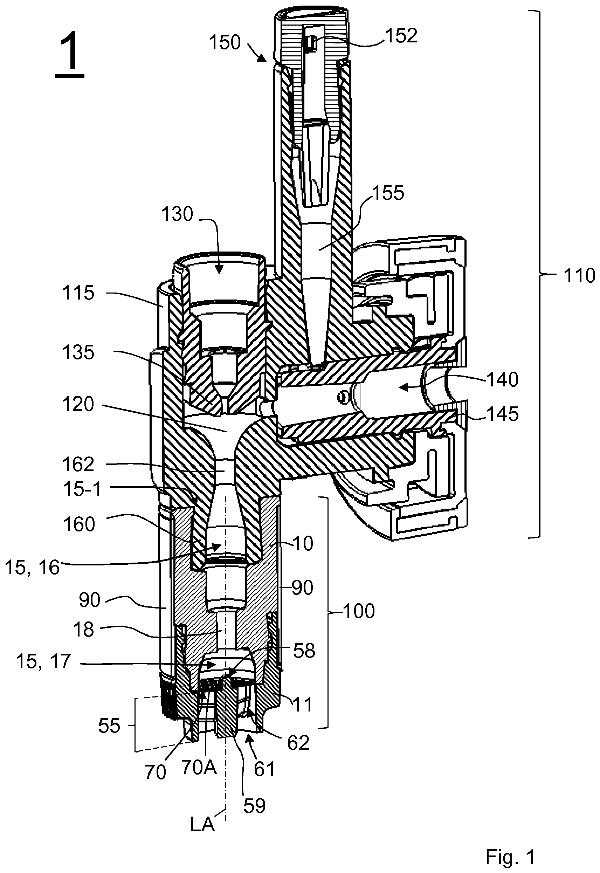

Fig. 1 zeigt eine Milchschäumvorrichtung 1, welche mit einer erfindungsgemässen Ausgabeeinrichtung ausgestattet ist. Die Milchschäumvorrichtung 1 umfasst im vorliegenden Beispiel eine Ausgabeeinrichtung 100 mit einer Emulsionskammer 15 und eine Einrichtung 110 zum Einlassen von Milch und Luft oder gegebenenfalls Milch, Luft und (Wasser-) Dampf in die Emulsionskammer 15 der Ausgabeeinrichtung 100.

Wie Fig. 1 andeutet, weist die Einrichtung 110 ein Gehäuse 115 auf, in welchem ein Hohlraum 120 ausgebildet ist, und umfasst ausserdem einen Einlass 130 zum Zuführen von (Wasser-) Dampf in den Hohlraum 120, einen Einlass 140 zum Zuführen von Milch in den Hohlraum 120 und eine Einrichtung 150 zum Zuführen von Luft in den Hohlraum 120. Der Einlass 140 zum Zuführen von Milch ist mit einem Anschluss 145 für eine (nicht dargestellte) Leitung versehen, deren eines Ende mit dem Anschluss 145 und deren anderes Ende mit einem (nicht dargestellten) Milchreservoir verbunden werden kann, um eine Zufuhr von Milch aus dem Milchreservoir zum Einlass 140 zu ermöglichen.

Wie Fig. 1 ausserdem andeutet, umfasst die Einrichtung 150 einen sich im Innern des Gehäuses 115 erstreckenden, mit dem Hohlraum 120 verbundenen Luftkanal 155 und eine Einlassöffnung 152, über welche der Luftkanal 155 mit der die Milchschäumvorrichtung 1 umgebenden Atmosphäre verbunden ist, sodass Luft durch die Einlassöffnung 152 und den Luftkanal 155 zum Hohlraum 120 gelangen kann.

Wie Fig. 1 weiterhin andeutet, ist der Einlass 130 zum Zuführen von Dampf in eine Dampfdüse 135 ausgebildet, welche in den Hohlraum 120 ragt, sodass Dampf durch den Einlass 130 über die Dampfdüse 135 in den Hohlraum 120 injiziert werden kann. Um auf einfache Weise eine Verbindung zwischen der Einrichtung 110 und der Ausgabeeinrichtung 100 zu ermöglichen, ist die Einrichtung 110 mit einem rohrförmigen Anschlussstutzen 160 versehen, welcher über einen Verbindungskanal 162 mit dem Hohlraum 120 verbunden ist.

Wie aus Fig. 1 ersichtlich, weist die Emulsionskammer 15 an einer Seite der Ausgabeeinrichtung 100 einen Fluid-Eingang 15-1 auf, durch welchen ein Fluid, beispielsweise in Form eines Gemischs aus Milch, Luft und Dampf, in die Emulsionskammer 15 eingelassen werden kann. Der Anschlussstutzen 160 der Einrichtung 110 ist derart geformt, dass die Ausgabeeinrichtung 100 derart auf den Anschlussstutzen 160 aufsteckbar ist, dass ein an den Fluid-Eingang 15-1 angrenzender Abschnitt der Ausgabeeinrichtung 100 formschlüssig auf dem Anschlussstutzen 160 sitzt.

Um mit der Milchschäumvorrichtung 1 Milchschaum zu erzeugen, kann der Anschluss 145 des Einlasses 140 über eine Leitung mit einem Milchreservoir verbunden werden und der Einlass 130 an eine (nicht dargestellte) Einrichtung zum Erzeugen von (Wasser-) Dampf angeschlossen werden. Wird nun Dampf durch den Einlass 130 bzw. die Dampfdüse 135 in den Hohlraum 120 injiziert, wird entsprechend dem Venturi-Effekt ein Unterdruck im Hohlraum 120 erzeugt, sodass Milch durch den Einlass 140 und Luft durch die Einlassöffnung 152 der Einrichtung 150 angesaugt wird und sich die derart angesaugte Milch und die derart angesaugte Luft im Hohlraum 120 mit dem injizierten Dampf mischen können. Das derart erzeugte Milch-Luft-Dampf-Gemisch strömt schliesslich durch den Verbindungskanal 162 in die Emulsionskammer 15, in der aus dem Milch-Luft-Dampf-Gemisch eine Emulsion in Form von Milchschaum entsteht, welche die Emulsionskammer 15 durch eine Ausgabeöffnung 61 am unteren Ende der Ausgabeeinrichtung 100 verlassen kann.

Die Emulsionskammer 15 besteht in dem dargestellten Ausführungsbeispiel vorzugsweise aus einem ersten Emulsionskammerabschnitt 16, einem zweiten Emulsionskammerabschnitt 17 sowie einen die Emulsionskammerabschnitte 16, 17 verbindenden Verbindungskanal 18. Der Fluid-Eingang 15-1 der Emulsionskammer 15, der erste Emulsionskammerabschnitt 16, der Verbindungskanal 18 und der zweite Emulsionskammerabschnitt 17 sind jeweils in einer Reihe hintereinander entlang einer Längsachse LA der Ausgabeeinrichtung 100 angeordnet. Ein durch den Fluid-Eingang 15-1 in die Emulsionskammer 15 strömendes Fluid durchströmt deshalb die Emulsionskammer 15 im Wesentlichen entlang der Längsachse LA der Ausgabeeinrichtung 100.

Der Verbindungskanal 18 weist einen Querschnitt (senkrecht zur Längsachse LA der Ausgabeeinrichtung 100) mit einer Fläche auf, welcher kleiner ist als die Querschnittsfläche, welche die Emulsionskammer 15 im ersten Emulsionskammerabschnitt 16 oder im zweiten Emulsionskammerabschnitt 17 aufweist (jeweils für einen Querschnitt senkrecht zur Längsachse LA). Die Emulsionskammerabschnitte 16 und 17 bilden deshalb in der Emulsionskammer 15 zwei separate Räume, welche lediglich über den Verbindungskanal 18 in einer Fluidverbindung stehen. Die Emulsionskammerabschnitte 16, 17 und der Verbindungskanal 18 sorgen für eine intensive Durchwirbelung des eingebrachten Fluides (im vorliegenden Fall eines Milch-Luft-Dampf-Gemischs) in den beiden Emulsionskammerabschnitten 16 und 17 und bewirken eine effektive Durchmischung aller Bestandteile des Fluids und somit insbesondere eine Emulgierung von Milch und Luft. Es versteht sich von selbst, dass die Emulsionskammer 15 auch aus nur einem einzigen (sich über die gesamte Länge der Emulsionskammer 15 erstreckenden) Raum bestehen kann, um die Entstehung einer Emulsion von Milch und Luft zu ermöglichen.

Stromabwärts des Fluid-Einlasses 15-1 ist eine Prallfläche 58 vorgesehen, welche sich quer zur Längsachse LA der Ausgabeeinrichtung 100 erstreckt, sodass ein in die Emulsionskammer 15 eingebrachtes und entlang der Längsachse LA strömendes Fluid auf die Prallfläche 58 trifft und dabei abgebremst und in der Emulsionskammer 15 homogenisiert wird, um die Bildung einer möglichst homogenen Mischung von Milch, Luft und Dampf in der Emulsionskammer 15 zu erzielen. Zusätzlich zur Prallfläche 58 kann ein Prallkörper 59 angeordnet werden, der weiter unten im Detail beschrieben wird.

Es sei darauf hingewiesen, dass die Einrichtung 110 auch so ausgebildet sein kann, dass die Zufuhr von Luft durch den Luftkanal 150 bei Bedarf unterbrochen werden kann. In diesem Fall würde - bei einer Zufuhr von Dampf durch den Einlass 130 - lediglich ein Gemisch von Dampf und Milch in die Emulsionskammer 15 gelangen, welches in Form von erwärmter (heisser) Milch aus der Ausgabeeinrichtung 100 ausgegeben werden kann. Weiterhin wäre es auch möglich, Milch mittels einer Pumpe durch den Einlass 140 in die Emulsionskammer 15 zu fördern. In diesem Fall wäre es möglich, (kalte oder gegebenenfalls erwärmte) Milch in die Emulsionskammer 15 zu fördern, ohne im Hohlraum 120 auf der Grundlage des Venturi-Effekts durch Einleiten von Dampf einen Unterdruck erzeugen zu müssen. Entsprechend wäre es denkbar, auf eine Zufuhr von Dampf ganz zu verzichten und der Emulsionskammer 15 nur ein Gemisch aus (kalter oder erwärmter) Milch und Luft zuzuführen.

Wie Fig. 1 weiterhin andeutet, ist die Ausgabeeinrichtung 100 im vorliegenden Beispiel mehrteilig ausgebildet: Die Ausgabeeinrichtung 100 umfasst zumindest zwei Teile - ein erstes (oberes) Teil 10 und ein zweites (unteres) Teil 11 - welche zu einer Einheit zusammengesetzt werden können (wie in Fig. 1 dargestellt) und voneinander getrennt werden können, um beispielsweise die Teile 10 und 11 bei Bedarf gründlich reinigen zu können. Weiterhin können die Teile 10 und 11, falls sie gemäss Fig. 1 zu einer Einheit zusammengesetzt sind, in einer Hülse 90 angeordnet sein, welche jedes der Teile 10 und 11 zumindest abschnittsweise umgibt und auf diese Weise geeignet ist, die Teile 10 und 11 derart zusammenzuhalten, dass die Teile 10 und 11 wieder aus der Hülse 90 entfernbar und voneinander trennbar sind.

Dabei umfassen die Teile 10 und 11, wenn sie zu einer Einheit zusammengesetzt sind, insbesondere die Emulsionskammer 15. Im vorliegenden Beispiel ist das erste (obere) Teil derart ausgebildet, dass es den Fluid-Eingang 15-1 der Emulsionskammer 15 und insbesondere den ersten Emulsionskammerabschnitt 16 der Emulsionskammer 15, den Verbindungskanal 18 und zumindest einen (über den Verbindungskanal 18 mit dem ersten Emulsionskammerabschnitt 16 verbundenen) Abschnitt des zweiten Emulsionskammerabschnitts 17 der Emulsionskammer 15 umfasst. Das zweite (untere) Teil 11 ist hingegen derart ausgebildet, dass es (falls es mit dem ersten Teil 10 zusammengesetzt ist, wie in Fig. 1 dargestellt) den zweiten Emulsionskammerabschnitt 17 der Emulsionskammer 15 an einem unteren Ende begrenzt und einen Ausgabebereich 55 mit der Ausgabeöffnung 61 zum Ausgeben eines in der Emulsionskammer 15 gebildeten emulgierten Fluids umfasst, wobei im Ausgabebereich 55 mindestens ein Ausgabekanal 62 angeordnet ist, der an einem seiner Enden mit dem zweiten Emulsionskammerabschnitt 17 der Emulsionskammer 15 verbunden ist und an einem anderen seiner Enden in die Ausgabeöffnung 61 des Ausgabebereichs 55 mündet, sodass emulgiertes Fluid aus der Emulsionskammer 15 durch den mindestens einen Ausgabekanal 62 zur Ausgabeöffnung 61 strömen kann.

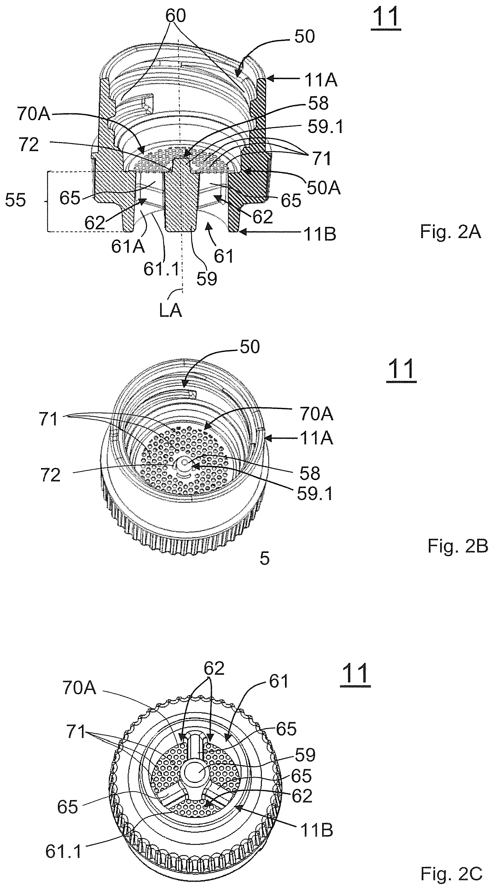

Wie Fig. 1 andeutet, weist die Ausgabeeinrichtung 100 eine Siebkörper-Anordnung 70 auf, welche im vorliegenden Beispiel einen Siebkörper 70A umfasst, wobei dieser Siebkörper 70A mehrere (in Fig. 1 nicht erkennbare, aber zumindest in Fig. 2A, 2B und 2B dargestellte) Durchtrittskanäle umfasst und im Bereich des mindestens einen Ausgabekanals 62 angeordnet ist, sodass ein aus der Emulsionskammer 15 über den mindestens einen Ausgabekanal 62 zur Ausgabeöffnung 61 strömendes emulgiertes Fluid den Siebkörper 70A via mindestens einen der Durchtrittskanäle passieren muss.

Der Siebkörper 70A gemäss Fig. 1 ist im vorliegenden Beispiel am zweiten (unteren) Teil 11 der Ausgabeeinrichtung 100 angeordnet, sodass sich der Siebkörper 70A im Wesentlichen senkrecht zur Längsachse LA der Ausgabeeinrichtung 100 erstreckt. Einzelheiten des Siebkörpers 70A und des zweiten Teils 11 gemäss Fig. 1 sind Fig. 2A-2C entnehmbar.

Wie Fig. 2A-2C andeuten, ist das zweite Teil 11 als ein im Wesentlichen zylinderförmiger Körper ausgebildet, welcher sich entlang der Längsachse LA erstreckt und an einem Ende 11B einen Längsabschnitt aufweist, welcher den Ausgabebereich 55 bildet. An dem anderen, dem Ende 11B gegenüberliegenden Ende 11A weist das zweite Teil 11 einen Längsabschnitt auf, welcher eine Ausnehmung 50 umfasst, die sich - ausgehend vom Ende 11A - entlang der Längsachse LA erstreckt und dementsprechend ein unteres Ende 50A aufweist, welches einen Abstand zum Ende 11A des zweiten Teils 11 aufweist. Im vorliegenden Beispiel ist der Ausgabebereich 55 im Wesentlichen identisch mit dem Längsabschnitt des zweiten Teils 11, welcher sich vom Ende 11B des zweiten Teils 11 bis zum Ende 50A der Ausnehmung 50 erstreckt.

Wie ersichtlich, ist in der Ausnehmung 50 ein Innengewinde 60 ausgebildet. Dieses Innengewinde 60 ermöglicht es, das zweite Teil 11 auf das erste Teil 10 aufzuschrauben, um das zweite Teil 11 mit dem ersten Teil 10 zu verbinden und somit an dem ersten Teil zu befestigen (wie in Fig. 1 dargestellt), wobei vorausgesetzt ist, dass das zweite Teil ein dem Innengewinde 60 entsprechendes (komplementäres) Aussengewinde aufweist. Die Ausnehmung 50 des zweiten Teils 11 grenzt unmittelbar an den Ausgabebereich 55 und bildet folglich einen Teil des zweiten Emulsionskammerabschnitts 17 der Emulsionskammer 15, sofern das erste Teil 10 und das zweite Teil 11 zu einer Einheit zusammengesetzt sind (wie in Fig. 1 dargestellt). Insbesondere bildet das Ende 50A der Ausnehmung 50 ein unteres Ende des zweiten Emulsionskammerabschnitts 17 der Emulsionskammer 15.

Wie insbesondere Fig. 2A und 2C andeuten, ist die Ausgabeöffnung 61 des Ausgabebereichs 55 am Ende 11B des zweiten Teils 11 ausgebildet, wobei ihr äusserer Rand 61.1 im vorliegenden Beispiel die Form eines Kreises aufweist. Wie in Fig. 2A dargestellt, wird die Ausgabeöffnung 61 durch den unteren Rand einer Begrenzungsfläche 61A begrenzt, welche sich am Ende 11B im Wesentlichen zylinderförmig um die Längsachse LA erstreckt und im Wesentlichen rotationssymmetrisch zur Längsachse LA angeordnet ist.

Die Begrenzungsfläche 61A erstreckt sich (ausgehend vom Ende 11B des zweiten Teils 11) entlang der Längsachse LA bis zum Ende 50A der Ausnehmung 50 und grenzt somit an den zweiten Emulsionskammerabschnitt 17 der Emulsionskammer 15.

Im Zentrum der Ausgabeöffnung 61 ist ein Prallkörper 59 angeordnet, welcher sich - ausgehend vom Ende 11B des zweiten Teils 11 - entlang der Längsachse LA in einem Abstand zur Begrenzungsfläche 61A erstreckt. Demzufolge ist zwischen dem Prallkörper 59 und der Begrenzungsfläche 61A ein ringförmiger Zwischenraum vorhanden, welcher zur Emulsionskammer 15 hin offen ist und somit eine Fluidverbindung zwischen der Emulsionskammer 15 und der Ausgabeöffnung 61 bildet, sodass ein Fluid aus der Emulsionskammer 15 durch diesen Zwischenraum zur Ausgabeöffnung 61 strömen kann.

Im vorliegenden Beispiel ist der Prallkörper 59 mittels Stegen 65 mit der Begrenzungsfläche 61A verbunden, sodass der Prallkörper 59 in einer fixen Position bezüglich der Begrenzungsfläche 61A bzw. der Ausgabeöffnung 61 gehalten ist. Die Anzahl der Stege 65 beträgt in diesem Fall drei, wobei sich die Stege 65 radial bezüglich der Längsachse LA im Zwischenraum zwischen dem Prallkörper 59 und der Begrenzungsfläche 61A erstrecken. Die Stege 65 unterteilen deshalb den Zwischenraum zwischen dem Prallkörper 59 und der Begrenzungsfläche 61A in drei separate Bereiche, von denen jeder einen Ausgabekanal 62 bildet, welcher an einem Ende mit der Emulsionskammer 15 verbunden ist und am anderen Ende in die Ausgabeöffnung 61 mündet, d.h. unter diesen Umständen kann ein in der Emulsionskammer 15 vorhandenes Fluid ausschliesslich durch die Ausgabekanäle 62 zur Ausgabeöffnung 61 strömen. Im vorliegenden Beispiel sind die Ausgabekanäle 62 im Wesentlichen gleich gross und haben jeweils einen Querschnitt (senkrecht zur Längsachse LA), welcher die Form eines Segments eines Kreisrings aufweist.

Wie Fig. 1, 2A und 2B weiter andeuten, weist der Prallkörper 59 an dem von der Ausgabeöffnung 61 abgewandten Ende einen (im Wesentlichen) zylinderförmigen Abschnitt 59.1 auf, welcher sich entlang der Längsachse LA derart erstreckt, dass er über das Ende 50A der Ausnehmung 50 hinaussteht und somit zumindest um einen Teil seiner Länge entlang der Längsachse LA in den zweiten Emulsionskammerabschnitt 17 der Emulsionskammer 15 hineinragt. Im vorliegenden Fall bildet eine Stirnfläche des zylinderförmigen Abschnitts 59.1 die (oben erwähnte) Prallfläche 58, auf deren Funktion bereits oben hingewiesen wurde.

Der Siebkörper 70A der Siebkörper-Anordnung 70 ist im vorliegenden Beispiel gemäss Fig. 1 und 2A-2C ein separates Teil, welches in das zweite Teil 11 einsetzbar ist. Der Siebkörper 70A gemäss Fig. 1 und 2A-2C ist als Lochplatte ausgebildet, welche eine Vielzahl von Durchtrittskanälen 71 aufweist und ausserdem derart geformt ist, dass sie in die Ausnehmung 50 des zweiten Teils 11 entlang der Längsachse LA einführbar und am Ende 50A der Ausnehmung 50 platzierbar ist. Im vorliegenden Beispiel hat der Siebkörper 70A die Form einer kreisringförmigen (vorzugsweise flachen) Platte mit einem zentralen Loch 72. Das Loch 72 ist dabei derart geformt, dass der zylinderförmige Abschnitt 59.1 des Prallkörpers 59 durch das zentrale Loch 72 durchführbar ist, wenn der Siebkörper 70A in die Ausnehmung 50 des zweites Teils 11 eingesetzt wird. In der Anordnung gemäss Fig. 1 und 2A-2C ist der Siebkörper 70A am Ende 50A der Ausnehmung 50 derart platziert, dass er sich quer zur Längsachse LA erstreckt und dabei derart auf dem Prallkörper 50 sitzt, dass der zylinderförmige Abschnitt 59.1 zumindest über einen Teil seiner Länge durch das zentrale Loch 72 ragt und somit über den Siebkörper 70A hinaus in den zweiten Emulsionskammerabschnitt 17 der Emulsionskammer 15 ragt. Die Form des zentralen Lochs 72 kann dabei so an die Form des zylinderförmigen Abschnitt 59.1 angepasst sein, dass der Siebkörper 70A in einer stabilen Lage gehalten ist, wenn der Siebköper 70A (wie vorstehend beschrieben) in die Ausnehmung 50 des zweites Teils 11 eingesetzt ist. In dieser Lage erstrecken sich die Durchtrittskanäle 71 im Wesentlichen parallel zur Längsachse LA.

Weiterhin sei darauf hingewiesen, dass der zylinderförmige Abschnitt 59.1 gemäss Fig. 1 und Fig. 2A derart weit durch das zentrale Loch 72 in den zweiten Emulsionskammerabschnitt 17 der Emulsionskammer 15 ragt, dass die Prallfläche 58 (in Richtung der Längsachse LA betrachtet) einen Abstand zum Siebkörper 70A aufweist. Diese Anordnung der Prallfläche 58 hat den Vorteil, dass eine Emulsion aus Milch und Luft, welche entlang der Längsachse LA in Richtung auf den Prallkörper 59 strömt, beim Auftreffen auf die Prallfläche 58 im zweiten Emulsionskammerabschnitt 17 besonders intensiv verwirbelt wird, was (wie erwähnt) eine Homogenisierung der Emulsion in besonders vorteilhafter Weise bewirkt.

Der Siebkörper 70A der Siebkörper-Anordnung 70 ist im vorliegenden Beispiel gemäss Fig. 1 und 2A-2C an den von der Ausgabeöffnung 61 abgewandten Enden der Ausgabekanäle 62 angeordnet und erstreckt sich im Wesentlichen senkrecht zur Längsachse LA derart, dass der Siebkörper 70A am Ende 50A der Ausnehmung 50 den Zwischenraum zwischen der Begrenzungsfläche 61A und dem Prallkörper 59 vollständig überdeckt. Ein Fluid, welches aus der Emulsionskammer 15 zur Ausgabeöffnung 61 strömt, muss folglich zunächst den Siebkörper 70A via die Durchtrittskanäle 71 passieren und anschliessend durch einen oder mehrere der Ausgabekanäle 62 strömen, um zur Ausgabeöffnung 61 zu gelangen.

Im vorliegenden Beispiel haben die Durchtrittskanäle 71 einen kreisförmigen Querschnitt und erststrecken sich in ihrer Längsrichtung jeweils im Wesentlichen parallel zueinander und im Wesentlichen senkrecht zur Oberfläche des Siebkörpers 70A (bzw. parallel zur Längsachse LA gemäss Fig. 1 und 2A). Der Durchmesser d der Durchtrittskanäle 71 liegt im Bereich von 0.1 bis 1.5 mm und die Länge der Durchtrittskanäle 71 liegt im Bereich von 0.1 bis 1.5 mm.

Falls unter diesen Bedingungen ein emulgiertes Fluid in Form von Milchschaum aus der Emulsionskammer 15 zur Ausgabeöffnung 61 strömt, durchströmt das emulgierte Fluid die Durchtrittskanäle 71 derart, dass zumindest in bestimmten Bereichen der Strömung in den Durchtrittskanälen 71 eine Dehnströmung vorliegt, welche geeignet ist, die im Fluid enthaltenen Michtropfen bzw. Luftblasen in kleinere Michtropfen bzw. Luftblasen zu teilen, sodass folglich (wie erwähnt) das emulgierte Fluid aus der Ausgabeöffnung 61 in Form eines Milchschaums strömt, welcher besonders kleine Michtropfen bzw. Luftblasen aufweist.

Es sei darauf hingewiesen, dass die Querschnittsfläche der Durchtrittskanäle 71 im Rahmen der vorliegenden Erfindung nicht notwendigerweise kreisförmig sein muss, sondern eine beliebige Form aufweisen kann (z.B. rund oder mit einer oder mehreren Ecken versehen).

Die obigen Angaben zum Durchmesser d der Durchtrittskanäle 71 (für den Fall, dass die Durchtrittskanäle 71 eine kreisförmige Querschnittsfläche aufweisen) können verallgemeinert werden auf Durchtrittskanäle 71 mit Querschnittsflächen, welche von einer Kreisform abweichen. Zur Charakterisierung der "Grösse" eines Querschnitts eines Durchtrittskanals 71 mit einer beliebig geformten Querschnittsfläche kann in diesem Zusammenhang die Angabe eines sogenannten "hydraulischen Durchmessers" dienen.

Der hydraulische Durchmesser $d_h$ ist eine rechnerische Größe, die zur Berechnung von Druckverlust und Durchsatz in Rohren oder Kanälen herangezogen werden kann, wenn der Querschnitt des Rohres bzw. Kanals von der Kreisform abweicht. Die Anwendung des hydraulischen Durchmessers stellt für turbulente Strömungen eine gute Näherung dar. Für Rohre bzw. Kanäle mit kreisförmigem Querschnitt sind die Strömungsverhältnisse umfangreich dokumentiert. Die Berechnung des hydraulischen Durchmessers dient dazu, für einen Strömungskanal mit einem beliebigen Querschnitt den Innendurchmesser desjenigen kreisrunden Rohres zu ermitteln, das bei gleicher Länge und gleicher mittlerer Strömungsgeschwindigkeit den gleichen Druckverlust wie der gegebene Strömungskanal aufweist. Die Definition des hydraulischen Durchmessers geht von der Vorstellung aus, dass vergleichbare Verhältnisse vorliegen, wenn die Querschnittsfläche A und der benetzte Umfang U der jeweiligen Strömungskanäle im gleichen Verhältnis zueinander stehen. Dabei ist bei Betrachtung eines Querschnitts eines Strömungskanals als "benetzter Umfang" jeweils die Länge der Kurve zu verstehen, an welcher das durch den Strömungskanal strömende Fluid die Wandung des Strömungskanals berührt. Somit gilt für den hydraulischen Durchmesser $d_h$ die Formel:

$$d_h = 4 \times \frac{A}{U}$$

Für einen Strömungskanal mit einem kreisförmigen Querschnitt mit dem Durchmesser d ist der hydraulische Durchmesser somit $d_h$ = d. Für einen Strömungskanals mit quadratischem Querschnitt der Seitenlänge a ist der hydraulische Durchmesser $d_h$ = a.

Unabhängig davon, welche Form der Querschnitt eines Durchtrittskanals 71 aufweist, sollte deshalb hinsichtlich des hydraulischen Durchmessers $d_h$ und der Länge der Durchtrittskanäle 71 gelten, dass der hydraulische Durchmesser $d_h$ der Durchtrittskanäle 71 im Bereich von 0.1 bis 1.5 mm liegt und die Länge der Durchtrittskanäle 71 im Bereich von 0.1 bis 1.5 mm liegt. Wie bereits erwähnt, können für den hydraulischen Durchmesser $d_h$ und die Länge L der Durchtrittskanäle 71 auch andere (in den vorstehend genannten Bereichen enthaltene) Bereiche angegeben werden, welche die Möglichkeit bieten, den aus der Ausgabeeinrichtung 100 ausgebbaren Milchschaum hinsichtlich seiner Konsistenz zu optimieren.

Beispielsweise können die Durchtrittskanäle des mindestens einen Siebkörpers 70A hinsichtlich eines Querschnitts der jeweiligen Durchtrittskanäle so gestaltet sein, dass der hydraulische Durchmesser $d_h$ der Durchtrittskanäle 71 bevorzugt im Bereich von 0.1 bis 1.0 mm, insbesondere im Bereich von 0.3 bis 0.9 mm liegt. Weiterhin können die Durchtrittskanäle des mindestens einen Siebkörpers 70A hinsichtlich einer Länge der jeweiligen Durchtrittskanäle so gestaltet sein, dass die Länge der Durchtrittskanäle bevorzugt im Bereich von 0.15 bis 1.0 mm, insbesondere im Bereich von 0.15 bis 0.9 mm liegt. Beispielsweise können die Durchtrittskanäle des mindestens einen Siebkörpers 70A so gestaltet sein, dass das Verhältnis des hydraulischen Durchmessers $d_h$ zur Länge der Durchtrittskanäle grösser als 1:1.5, bevorzugt grösser als 1:1.25 und kleiner als 4:1, insbesondere grösser als 1:1.25 und kleiner als 3:1 ist.

Wie erwähnt, ist der Siebkörper 70A der Siebkörper-Anordnung 70 im Beispiel gemäss Fig. 1 und 2A-2C ein separates Teil, welches in das zweite Teil 11 einsetzbar ist. Dies hat den Vorteil, dass verschiedene Werkstoffe für den Siebkörper 70A und das zweite Teil 11 verwendet werden können und ausserdem verschiedene Herstellungsverfahren zum Einsatz kommen können, um den Siebkörper 70A bzw. das zweite Teil 11 herzustellen. Somit besteht die Möglichkeit, den Siebkörper 70A und das zweite Teil 11 unabhängig voneinander und gegebenenfalls nach unterschiedlichen Kriterien zu optimieren. Ausserdem besteht die Möglichkeit, den Siebkörper 70A und das zweite Teil 11 voneinander zu separieren, um beispielsweise den Siebkörper 70A unabhängig vom zweiten Teil 11 reinigen zu können (gegebenenfalls mit Reinigungsmitteln, welche für den Werkstoff es zweiten Teils 11 nicht verträglich sind) oder den Siebköper 70A im Falle eines Defekts durch einen entsprechenden neuen Siebkörper zu ersetzen.

Das zweite Teil 11 könnte beispielsweise aus Kunststoff bestehen und mit konventionellen und insbesondere kostengünstigen Verfahren zur Herstellung von Kunststoffteilen, z.B. mittels Spritzgiessen, hergestellt werden. Der Siebkörper 70A könnte hingegen aus einem metallischen Werkstoff bestehen und beispielsweise als Lochblech (bzw. als metallische Lochplatte) ausgebildet sein. Ein derartiges Lochblech könnte aus einem Blech gefertigt sein, welches einerseits eine geringe Dicke und andererseits wegen der Verwendung eines metallischen Werkstoffs eine hinreichend grosse mechanische Stabilität aufweisen könnte. Zur Herstellung der Durchtrittskanäle 71 stehen in diesem Fall geeignete Verfahren zur Bearbeitung dünner Bleche zur Verfügung, mit denen ein entsprechendes Bleich mit einer Vielzahl von durchgehenden Löchern versehen werden kann, welche jeweils einen geringen Durchmesser (z.B. in der Nähe der oben angegebenen unteren Grenze für den hydraulischen Durchmesser $d_h$ der Durchtrittskanäle 71) aufweisen können und ausserdem mit einem geringen Abstand zwischen zwei benachbarten Durchtrittskanälen angeordnet sein können.

Alternativ kann der der Siebkörper 70A der Siebkörper-Anordnung 70 im Beispiel gemäss Fig. 1 und 2A-2C als Gitterstruktur, z.B. als Gewebe oder Geflecht aus sich kreuzenden Metalldrähten oder Fasern (vorzugsweise aus Kunststoff), ausbildet sein, wobei die Durchtrittskanäle "maschenförmig" ausgestaltet sind, d.h. jeweils zwischen miteinander maschenförmig verbundenen Metalldrähten oder Fasern ausbildet sind.

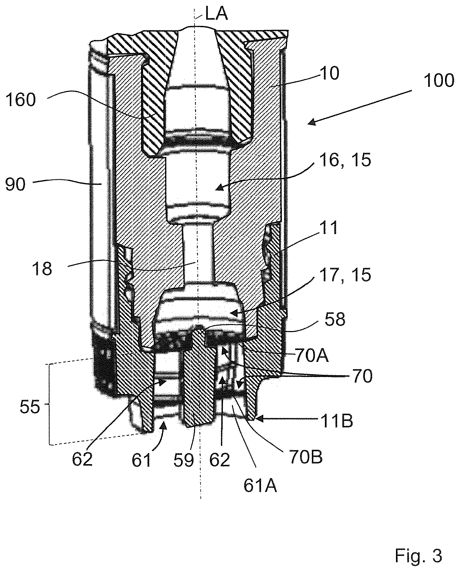

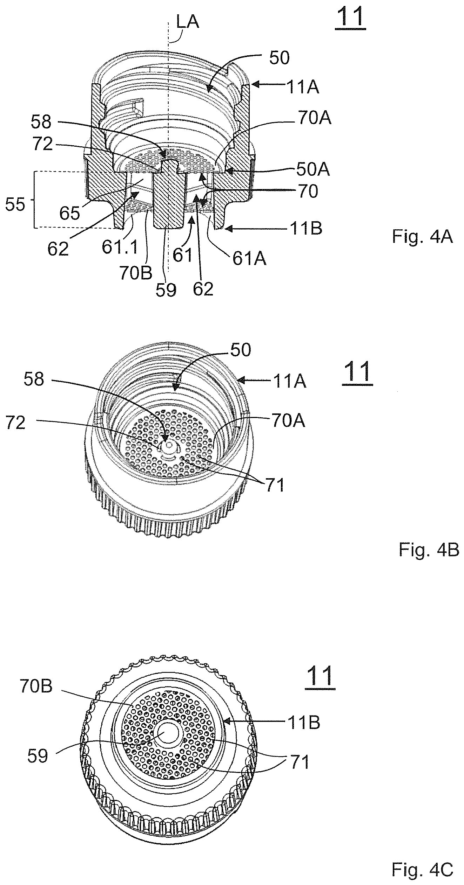

Mit Bezug auf Fig. 3 und 4A-4C wird im Folgenden eine zweite Ausführungsform der Ausgabeeinrichtung 100 erläutert. Die zweite Ausführungsform der Ausgabeeinrichtung 100 hat eine Reihe von Gemeinsamkeiten mit der Ausführungsform der Ausgabeeinrichtung 100 gemäss Fig. 1 und 2A-2C. Dementsprechend sind in den Fig. 1, 2A-2C, 3 und 4A-4C jeweils gleiche bzw. gleichwirkende Teile mit denselben Bezugszeichen versehen, wobei die obige Beschreibung der Ausführungsform der Ausgabeeinrichtung 100 gemäss Fig. 1 und 2A-2C auf analoge Weise auf die zweite Ausführungsform der Ausgabeeinrichtung 100 gemäss Fig. 3 und 4A-4C anwendbar ist.

Die beiden Ausführungsformen der Ausgabeeinrichtung 100 gemäss Fig. 1 und 2A-2C bzw. gemäss Fig. 3 und 4A-4C unterscheiden sich im Wesentlichen nur im Hinblick auf konstruktive Einzelheiten der Siebkörper-Anordnung 70.

Während die Siebkörper-Anordnung 70 im Falle der Ausgabeeinrichtung 100 gemäss Fig. 1 und 2A-2C einen einzigen Siebkörper 70A umfasst, ist es grundsätzlich auch möglich, dass die Siebkörper-Anordnung 70 zwei oder mehr Siebkörper aufweisen. Falls die Siebkörper-Anordnung 70 mehrere Siebkörper umfasst, können diese vorzugsweise in einer Reihe hintereinander angeordnet sein, sodass das zur Ausgabeöffnung 61 strömende emulgierte Fluid die einzelnen Siebkörper jeweils nacheinander passieren muss und somit die Durchtrittskanäle mehrerer verschiedener Siebkörper nacheinander durchströmen muss.

Fig. 3 und 4A-4C zeigen ein Beispiel für eine Siebkörper-Anordnung 70, welche zwei Siebkörper 70A und 70B umfasst. Gemäss diesem Beispiel sind die Siebkörper 70A und 70B jeweils separate Teile, welche in das zweite Teil 11 der Ausgabeeinrichtung 100 eingesetzt werden müssen und gegebenenfalls wieder entfernt werden können. Dabei ist der Siebkörper 70A gemäss Fig. 3 und 4A-4C hinsichtlich seiner Struktur identisch mit dem Siebkörper 70A gemäss Fig. 1 und 2A-2C. Der Siebkörper 70B hat im vorliegenden Beispiel im Wesentlichen dieselbe Struktur wie der Siebkörper 70A und hat dementsprechend - wie der Siebkörper 70A - die Form die Form einer kreisringförmigen (vorzugsweise flachen) Platte, welche ein zentrales Loch aufweist. Der Siebkörper 70B ist insbesondere so geformt, dass er durch die Ausgabeöffnung 61 des zweiten Teils 11 geführt und beispielsweise in dem Zwischenraum, welcher (wie erwähnt) zwischen dem Prallkörper 59 und der Begrenzungsfläche 61A ausgebildet ist, platziert werden kann. Das zentrale Loch des Siebkörpers 70B ist dabei so bemessen, dass Prallkörper 59 formschlüssig in dieses Loch passt.

Im Falle der Siebkörper-Anordnung 70 gemäss Fig. 3 und 4A-4C sind die Siebkörper 70A und 70B derart platziert, dass sie sich jeweils im Wesentlichen senkrecht zur Längsachse LA erstrecken. Die Durchtrittskanäle 71 der Siebkörper 70A und 70B erstrecken sich dabei im Wesentlichen parallel zur Längsachse LA.

Der Siebkörper 70A der Siebkörper-Anordnung 70 gemäss Fig. 3 und 4A-4C ist auf dieselbe Weise angeordnet wie der Siebkörper 70A der Siebkörper-Anordnung 70 gemäss Fig. 1 und 2A-2C, d.h. an den von der Ausgabeöffnung 61 abgewandten Enden der Ausgabekanäle 62, sodass der Siebkörper 70A am Ende 50A der Ausnehmung 50 den Zwischenraum zwischen der Begrenzungsfläche 61A und dem Prallkörper 59 vollständig überdeckt. Der Siebkörper 70B ist in diesem Beispiel in dem Zwischenraum, welcher (wie erwähnt) zwischen dem Prallkörper 59 und der Begrenzungsfläche 61A ausgebildet ist, derart platziert, dass die Siebkörper 70A und 70B einen Abstand in Richtung der Längsachse LA aufweisen und somit in Richtung der Längsachse LA durch einen Zwischenraum separiert sind. Im vorliegenden Beispiel sind die Siebkörper 70A und 70B auf gegenüberliegenden Seiten der Stege 65 angeordnet, welche den Prallkörper 59 mit den Begrenzungsflächen 61A verbinden und die Ausgabekanäle 62 voneinander trennen. Der Abstand zwischen den Siebkörpern 70A und 70B ist deshalb mindestens gleich der (oder grösser als die) Erstreckung der Stege 65 in Richtung der Längsachse LA. Dieser Abstand liegt typischerweise im Bereich von 0.1 bis 20 mm, bevorzugt im Bereich von 0.5 bis 2.5 mm, insbesondere im Bereich von 0.9 bis 1.2 mm.

Emulgiertes Fluid, welches aus der Emulsionskammer 15 durch die Ausgabekanäle 62 zur Ausgabeöffnung 61 strömt, strömt hierbei im Wesentlichen entlang der Längsachse LA und passiert hierbei nacheinander den Siebkörper 70A und den Siebkörper 70B via die jeweiligen Durchtrittskanäle 71 des Siebkörpers 70A bzw. des Siebkörpers 70B.

Die im emulgierten Fluid enthaltenen Milchtropfen bzw. Luftblasen können beim Durchströmen der Durchtrittskanäle 71 des Siebkörpers 70A und anschliessend beim Durchströmen der Durchtrittskanäle 71 des Siebkörpers 70B jeweils in kleinere Milchtropfen bzw. kleinere Luftblasen geteilt werden (infolge von Dehnströmungen, welche sich in den Durchtrittskanälen 71 der Siebkörpers 70A, 70B ausbilden).

Der Zwischenraum zwischen den Siebkörpern 70A und 70B hat zusätzlich den Effekt, dass das emulgierte Fluid nach dem Passieren des Siebkörpers 70A diesen Zwischenraum in einer turbulenten Strömung durchströmt, welche am Siebkörper 70B gebremst wird. Dies führt zu einer Durchwirbelung des emulgierten Fluids in diesem Zwischenraum und zu einer Beruhigung der Strömung in diesem Zwischenraum, mit dem Ergebnis, dass das Durchströmen des Zwischenraums zwischen den Siebkörpern 70A und 70B die Homogenität der räumlichen Verteilung von Milchtropfen und Luftblasen in dem emulgierten Fluid verbessert.

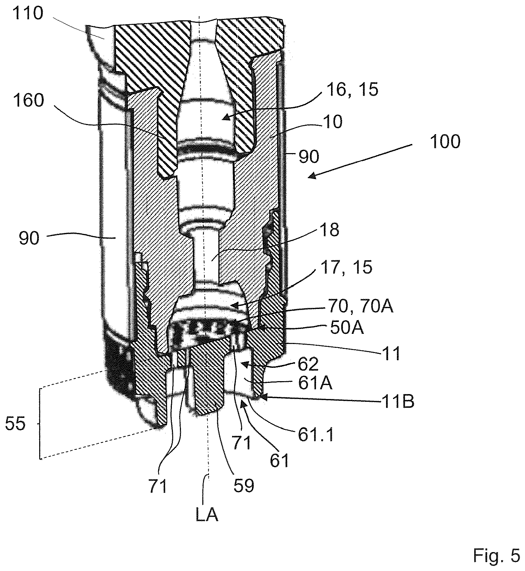

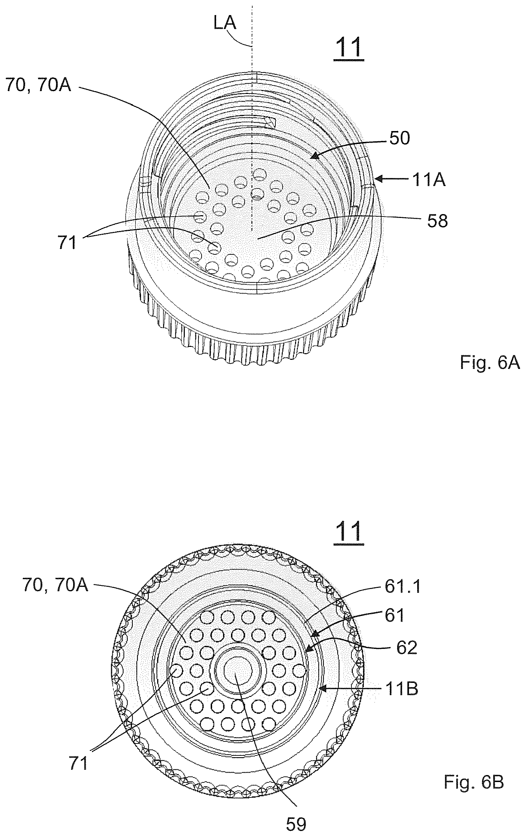

Mit Bezug auf Fig. 5, 6A und 6B wird im Folgenden eine dritte Ausführungsform der Ausgabeeinrichtung 100 erläutert. Die dritte Ausführungsform der Ausgabeeinrichtung 100 hat eine Reihe von Gemeinsamkeiten mit der Ausführungsform der Ausgabeeinrichtung 100 gemäss Fig. 1 und 2A-2C. Dementsprechend sind in den Fig. 1, 2A-2C, 5, 6A und 6B jeweils gleiche bzw. gleichwirkende Teile mit denselben Bezugszeichen versehen, wobei die obige Beschreibung der Ausführungsform der Ausgabeeinrichtung 100 gemäss Fig. 1 und 2A-2C auf analoge Weise auf die dritte Ausführungsform der Ausgabeeinrichtung 100 gemäss Fig. 5, 6A und 6B anwendbar ist.

Die Ausgabeeinrichtung 100 gemäss Fig. 5, 6A und 6B weist eine Siebkörperanordnung 70 mit einem einzigen Siebkörper 70A auf, welcher als integraler Bestandteil des zweiten Teils 11 der Ausgabeeinrichtung 100 realisiert ist, d.h. im vorliegenden Beispiel sind die Siebkörperanordnung 70 bzw. der Siebkörper 70A und das zweite Teil 11 gemeinsam als einstückiges Bauteil herstellbar. Das zweite Teil 11 kann zusammen mit der Siebkörperanordnung 70 beispielsweise aus Kunststoff bestehen, was eine kostengünstige Herstellung ermöglicht, beispielsweise gemäss einem Spritzgussverfahren.

Das zweite Teil 11 gemäss Fig. 5, 6A und 6B hat insbesondere einen einstückig ausgebildeten Ausgabebereich 55, welcher im vorliegenden Beispiel aus einem Längsabschnitt des zweiten Teils 11 besteht, der sich entlang der Längsachse LA zwischen dem Ende 11B des zweiten Teils 11 und dem Ende 50A der Ausnehmung 50 des zweiten Teils 11 erstreckt und insbesondere die Ausgabeöffnung 61 enthält. Der Ausgabebereich 55 umfasst weiterhin einen Prallkörper 59, welcher im Zentrum der Ausgabeöffnung 61 platziert ist und sich - ausgehend von der Ausgabeöffnung 61 - entlang der Längsachse LA in einem Abstand zur Begrenzungsfläche 61A erstreckt, sodass zwischen dem Prallkörper 59 und der Begrenzungsfläche 61A ein Zwischenraum ausgebildet ist, welcher sich im Wesentlichen kreisringförmig um die Längsachse LA bzw. den Prallkörper 59 erstreckt. An dem von der Ausgabeöffnung abgewandten Ende dieses Zwischenraums bzw. am Ende 50A der Ausnehmung 50 des zweiten Teils 11 ist der Siebkörper 70A ausgebildet, und zwar als ein Abschnitt des zweiten Teils 11, welche sich zwischen dem Prallkörper 59 und der Begrenzungsfläche 61A erstreckt und den Prallkörper 59 fest mit der Begrenzungsfläche 61 verbindet, sodass der Prallkörper 59 in einer stabilen Position bezüglich der Begrenzungsfläche 61A und der Ausgabeöffnung 61 gehalten ist.

Im vorliegenden Beispiel ist der Prallkörper 59 über den Siebköper 70A derart mit der Begrenzungsfläche 61A verbunden, dass der Prallkörper 59 und der Siebkörper 70A in Verbindung miteinander am Ende 50A der Ausnehmung 50 eine ebene Grenzfläche bilden, welche die Ausnehmung 50 an ihrem Ende 50A begrenzt. Ein zentraler (d.h. im Wesentlichen in der Mitte) bzw. auf der Längsachse LA angeordneter Bereich dieser Grenzfläche bildet in diesem Fall eine Prallfläche 58, wobei die der Ausnehmung 50 zugewandte Oberfläche des Siebkörpers 70A sich ringförmig um die Prallfläche 58 erstreckt und in radialer Richtung bündig (stufenlos) an die Prallfläche 58 grenzt. Demzufolge hat die Prallfläche 58 aufgrund ihrer Anordnung den Effekt, dass emulgiertes Fluid, welches die Emulsionskammer 15 entlang der Längsachse LA durchströmt, auf die Prallfläche 58 trifft und infolgedessen an der Prallfläche 58 gebremst und in der Emulsionskammer verwirbelt wird.

Der Siebkörper 70A umfasst eine Vielzahl von Durchtrittskanälen 71, welche sich im Wesentlichen parallel zur Längsachse LA erstrecken und eine kreisförmige Querschnittsfläche aufweisen. Die Durchtrittskanälen 71 sind in einem sich ringförmig um die Prallfläche 58 bzw. den Prallkörper 59 erstreckenden Raumbereich gleichmässig verteilt um die Prallfläche 58 herum angeordnet, sodass sie an einem der Ausgabeöffnung 61 zugewandten Ende in den Zwischenraum zwischen dem Prallkörper 59 und der Begrenzungsfläche 61A münden. Dieser Zwischenraum ist somit sowohl mit der Emulsionskammer 15 als auch mit der Ausgabeöffnung 61 in Fluidverbindung und bildet somit einen (einzigen) Ausgabekanal 62, durch welchen emulgiertes Fluid aus der Emulsionskammer 15 zur Ausgabeöffnung 61 strömen kann. Dieser Ausgabekanal 62 der Ausgabeeinrichtung 100 gemäss Fig. 5 und 6A-6B erstreckt sich derart entlang der Längsachse LA, dass er den Prallkörper 59 im Bereich zwischen dem Siebkörper 70A und der Ausgabeöffnung 61 kreisringförmig umgibt. Auf diese Weise ist gewährleistet, dass der in der Ausgabeeinrichtung 100 erzeugte Milchschaum aus Ausgabeöffnung 61 in Form eines Strahls strömt, welcher einen kreisförmigen Querschnitt aufweist und über die gesamte Fläche eines Querschnitts homogen ist.

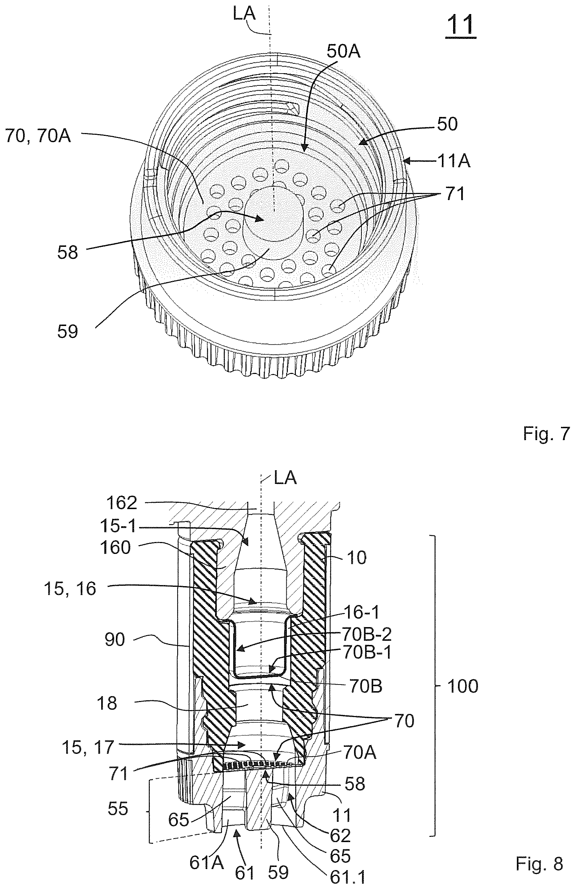

Mit Bezug auf Fig. 7 wird im Folgenden eine weitere Ausführungsform der Ausgabeeinrichtung 100 erläutert. Diese Ausführungsform unterscheidet sich von der Ausgabeeinrichtung 100 gemäss Fig. 5, 6A und 6B durch konstruktive Einzelheiten, welche ausschliesslich das zweite Teil 11 betreffen. In Fig. 7 ist deshalb ausschliesslich das zweite Teil 11 gemäss der weiteren Ausführungsform aus einer Perspektive dargestellt, welche Unterschiede zu der Ausgabeeinrichtung 100 gemäss Fig. 5, 6A und 6B verdeutlicht.

Im vorliegenden Beispiel gemäss Fig. 7 ist der Prallkörper 59 über den Siebköper 70A derart mit der Begrenzungsfläche 61A verbunden, dass der Prallkörper 59 und der Siebkörper 70A in Verbindung miteinander am Ende 50A der Ausnehmung 50 eine Grenzfläche bilden, welche die Ausnehmung 50 an ihrem Ende 50A begrenzt. Ein zentraler (d.h. im Wesentlichen in der Mitte) bzw. auf der Längsachse LA angeordneter Bereich dieser Grenzfläche bildet in diesem Fall die Prallfläche 58, welche im vorliegenden Beispiel an einer der Ausnehmung 50 zugewandten (bzw. von der Ausgabeöffnung 61 abgewandten) Stirnfläche des Prallkörpers 59 ausgebildet ist.

Die der Ausnehmung 50 zugewandte Oberfläche des Siebkörpers 70A erstreckt sich ringförmig um die Prallfläche 58 bzw. den Prallkörper 59. Im Unterschied zur Ausgabeeinrichtung 100 gemäss Fig. 5, 6A und 6B grenzt allerdings die der Ausnehmung 50 zugewandte Oberfläche des Siebkörpers 70A in radialer Richtung nicht stufenlos an die Prallfläche 58. Vielmehr erstreckt sich der Prallkörper 59 entlang der Längsachse LA derart, dass ein Längsabschnitt des Prallkörpers 59 in der Längsrichtung LA (ausgehend vom Ende 50A der Ausnehmung 50) in Richtung des Endes 11A des zweiten Teils 11 über den Siebkörper 70A hinaus ragt. In diesem Fall ist die Prallfläche 58 in einem Abstand zu der der Ausnehmung 50 zugewandten Oberfläche des Siebkörpers 70A angeordnet und insbesondere - mit Bezug auf die Strömungsrichtung eines vom Fluid-Einlass 15-1 zur Ausgabeöffnung 61 strömenden Fluids - dem Siebkörper 70A vorgeordnet. Diese Ausbildung des Prallkörpers hat den Effekt, dass ein entlang der Längsachse LA in Richtung auf die Ausgabeöffnung 61 strömendes Fluid besonders intensiv in der Umgebung des Prallkörper 59 verwirbelt wird.

Im Falle der Ausführungsformen gemäss Fig. 1-7 sind die jeweiligen Siebkörper 70A bzw. 70B der Siebkörper-Anordnung 70 in der Regel flache, planar ausgebildete Körper, d.h. die Siebkörper 70A bzw. 70B erstrecken sich (zumindest in einem Bereich, in dem die Durchtrittskanäle 71 angeordnet sind) entlang einer Ebene, wobei gegenüberliegende Seiten des jeweiligen Siebkörpers 70A bzw. 70B durch parallel zueinander angeordnete Ebenen begrenzt sind und die Durchtrittskanäle 71 sich vorzugsweise im Wesentlichen senkrecht zu diesen Ebenen erstrecken.

Es sei darauf hingewiesen, dass die Erfindung nicht auf Siebkörper beschränkt ist, welche die Form eines planar ausgebildeten Körpers aufweisen. Der jeweilige Siebkörper sollte im Allgemeinen derart geformt sein, dass er (zumindest in einem Bereich, in dem die Durchtrittskanäle angeordnet sind) zwei gegenüberliegende Raumbereiche voneinander trennt, wobei die Durchtrittskanäle eine Fluidverbindung zwischen diesen zwei gegenüberliegenden Raumbereichen bilden. Dementsprechend kann der jeweilige Siebkörper zumindest in einem Bereich, in dem die Durchtrittskanäle angeordnet sind, als eine Struktur ausgebildet sein, welche beispielsweise gekrümmt oder gewölbt ist oder sich entlang der Kontur (oder zumindest eines Bereichs der Kontur) eines Zylinders, eines Kegels, eines Kegelstumpfes, eines Würfels, eines Quaders, eines Tetraeders oder dergleichen erstreckt.

Ein Beispiel für eine Siebkörper-Anordnung, welche mindesten einen nicht-planaren Siebkörper enthält, ist in Fig. 8 dargestellt. Fig. 8 zeigt eine Ausgabeeinrichtung 100, welche hinsichtlich ihrer Struktur im Wesentlichen den Ausgabeeinrichtungen 100 gemäss Fig. 1 und 3 entspricht. Die Ausgabeeinrichtung 100 gemäss Fig. 8 umfasst eine Siebkörper-Anordnung 70, welche zwei Siebkörper aufweist, d.h. einen Siebkörper 70A und einen Siebkörper 70B. Der Siebkörper 70A gemäss Fig. 8 ist hinsichtlich seiner Struktur wie der Siebkörper 70A gemäss Fig. 1, 2a-2c und 3 ausgebildet. Dementsprechend ist der Siebkörper 70A gemäss Fig. 8 ein flacher, planar ausgebildeter Körper mit einer Mehrzahl von Durchtrittskanälen 71. Der Siebkörper 70A gemäss Fig. 8 ist im vorliegenden Beispiel weiterhin derart an dem von der Ausgabeöffnung 61 abgewandten Ende des Prallkörpers 59 angeordnet, dass der Siebkörper 70A auf dem Prallkörper 59 sitzt und sich ausserdem im Wesentlichen senkrecht zur Längsachse LA derart erstreckt, dass der Siebkörper 70A den Zwischenraum zwischen der Begrenzungsfläche 61A und dem Prallkörper 59 vollständig überdeckt.

Gemäss Fig. 8 ist der Siebkörper 70B stromaufwärts des Siebkörpers 70A in der Emulsionskammer 15 angeordnet, sodass der Siebkörper 70B einen Abstand zum Siebkörper 70A aufweist. Im vorliegenden Beispiel ist der Siebkörper 70B im Bereich des ersten Emulsionskammerabschnitts 16 der Emulsionskammer 15 angeordnet und erstreckt sich quer zur Längsachse LA über den gesamten Querschnitt der Emulsionskammer 15, sodass ein Milch-Luft-Dampf-Gemisch, welches gegebenenfalls über den Verbindungskanal 162 und den Fluid-Einlass 15-1 in die Emulsionskammer 15 strömen kann, bzw. eine Milch und Luft enthaltende Emulsion, welche sich aus dem Milch-Luft-Dampf-Gemisch stromaufwärts des Siebkörpers 70B bilden kann, zunächst den Siebkörper 70B passieren muss, um in den Zwischenraum zwischen dem Siebkörper 70B und dem Siebkörper 70A zu gelangen.

Im vorliegenden Beispiel gemäss Fig. 8 bildet der Siebkörper 70B einen Behälter mit einer (Durchtrittskanäle aufweisenden) Behälterwand, welche in einem Bereich eine zylinderförmige Ausformung aufweist, d.h. ein Bereich des Siebkörpers 70B erstreckt sich entlang der Kontur eines Bereichs eines Zylinders (insbesondere entlang der Mantelfläche und einer Stirnfläche des Zylinders) und umfasst dementsprechend einen Bereich 70B-1, welcher planar ausgebildet ist und sich entlang einer Stirnfläche des Zylinders erstreckt, und ausserdem einen mit dem Bereich 70B-1 verbundenen Bereich 70B-2, welcher sich entlang der Mantelfläche des Zylinders erstreckt. Im vorliegenden Beispiel ist der Siebkörper 70B derart platziert und geformt, dass sich der Bereich 70B-1 des Siebkörpers 70B im Wesentlichen senkrecht zur Längsachse LA erstreckt und sich der Bereich 70B-2 des Siebkörpers 70B um die Längsachse LA in einem Abstand zur Längsachse LA erstreckt. Die Bereiche 70B-1 und 70B-2 können beispielsweise (wie in Fig. 8 angedeutet) rotationssymmetrisch zur Längsachse LA ausgebildet sein.

Der Siebkörper 70B weist eine Mehrzahl von (in Fig. 8 nicht dargestellten) Durchtrittskanälen auf, welche für ein Milch-Luft-Dampf-Gemisch bzw. eine Milch und Luft enthaltende Emulsion durchgängig sind. Derartige Durchtrittskanäle können im Bereich 70B-1 oder im Bereich 70B-2 oder in den Bereichen 70B-1 und 70B-2 ausgebildet sein, wobei im Bereich 70B-1 ausgebildete Durchtrittskanäle sich vorzugsweise im Wesentlichen in Richtung der Längsachse LA erstrecken und im Bereich 70B-2 ausgebildete Durchtrittskanäle sich vorzugsweise im Wesentlichen radial zur Längsachse LA erstrecken. Falls im Bereich 70B-2 des Siebkörpers 70B Durchtrittskanäle ausgebildet sind, ist der Siebkörper 70B vorzugsweise derart geformt und derart in der Emulsionskammer 15 angeordnet, dass zwischen dem Bereich 70B-2 des Siebkörpers 70B und der die Emulsionskammer 15 begrenzenden Fläche des oberen Teils 10 der Ausgabeeinrichtung 100 ein Zwischenraum 16-1 ausgebildet ist, welcher sich ringförmig um den Bereich 70B-2 des Siebkörpers 70B erstreckt. Auf diese Weise ist gewährleistet, dass ein Milch-Luft-Dampf-Gemisch, welches den Siebkörper 70B via die in den Bereichen 70B-2 ausgebildeten Durchtrittskanäle passiert, durch den Zwischenraum 16-1 in Richtung der Längsachse LA zum Siebkörper 70A strömen kann.

Der Siebkörper 70B ist im vorliegenden Beispiel gemäss Fig. 8 relativ zum Siebkörper 70A in einem Abstand angeordnet, welcher typischerweise im Bereich von 0.1 bis 20 mm liegt. Der Zwischenraum zwischen den Siebkörpern 70A und 70B hat zusätzlich den Effekt, dass das emulgierte Fluid nach dem Passieren des Siebkörpers 70B diesen Zwischenraum in einer turbulenten Strömung durchströmt, welche am Siebkörper 70A gebremst wird. Dies führt zu einer Durchwirbelung des emulgierten Fluids in diesem Zwischenraum und zu einer Beruhigung der Strömung in diesem Zwischenraum, mit dem Ergebnis, dass das Durchströmen des Zwischenraums zwischen den Siebkörpern 70B und 70A die Homogenität der räumlichen Verteilung von Milchtropfen und Luftblasen in dem emulgierten Fluid verbessert.

**Patentansprüche**

1.  Ausgabeeinrichtung (100) für eine Milchschäumvorrichtung (1), wobei die Ausgabeeinrichtung umfasst:

    eine Emulsionskammer (15) mit einem Fluid-Einlass (15-1) zum Einlassen eines Milch, Luft und/oder Dampf enthaltenden Fluids in die Emulsionskammer (15), welches Fluid in der Emulsionskammer (15) zu einem emulgierten Fluid in Form von Milchschaum emulgiert;
    einen Ausgabebereich (55) mit einer Ausgabeöffnung (61) zum Ausgeben des emulgierten Fluids aus der Emulsionskammer (15), welcher Ausgabebereich (55) mindestens einen Ausgabekanal (62) aufweist, der mit der Emulsionskammer (15) und der Ausgabeöffnung (61) in Fluidverbindung steht, sodass das emulgierte Fluid aus der Emulsionskammer (15) durch den mindestens einen Ausgabekanal (62) zur Ausgabeöffnung (61) strömen kann,
wobei im Ausgabebereich (55) ausserdem eine Prallfläche (58) und/oder mindestens ein Prallkörper (59) zum Abbremsen und Verwirbeln des in die Emulsionskammer (15) eingelassenen Fluids angeordnet ist,
**dadurch gekennzeichnet, dass**
eine Siebkörper-Anordnung (70) mit mindestens einem Siebkörper (70A, 70B) vorhanden ist, welcher mindestens eine Siebkörper (70A, 70B) mehrere Durchtrittskanäle (71) umfasst und stromaufwärts der Ausgabeöffnung (61) angeordnet ist, sodass von der Emulsionskammer (15) zur Ausgabeöffnung (61) strömendes emulgiertes Fluid den mindestens einen Siebkörper (70A, 70B) via mindestens einen der Durchtrittskanäle (71) passieren muss, und
ein hydraulischer Durchmesser ($d_h$) der Durchtrittskanäle (71) im Bereich von 0.1 bis 1.5 mm liegt und eine Länge der Durchtrittskanäle (71) im Bereich von 0.1 bis 1.5 mm liegt,
wobei die Durchtrittskanäle (71) des mindestens einen Siebkörpers (70A, 70B) in einem Raumbereich angeordnet sind, welcher sich ringförmig um die Prallfläche (58) und/oder den mindestens einen Prallkörper (59) erstreckt.

2.  Ausgabeeinrichtung (100) nach Anspruch 1, wobei die Prallfläche und/oder der mindestens eine Prallkörper (59) in einem zentralen Bereich der Ausgabeöffnung (61) angeordnet ist.

3.  Ausgabeeinrichtung (100) nach Anspruch 1 oder 2, wobei das Verhältnis des hydraulischen Durchmessers zur Länge der Durchtrittskanäle (71) grösser als 1:1.5, bevorzugt grösser als 1:1.25 und kleiner als 4:1, insbesondere grösser als 1:1.25 und kleiner als 3:1 ist.

4.  Ausgabeeinrichtung (100) nach einem der Ansprüche 1-3, wobei der mindestens eine Siebkörper (70A, 70B) stromaufwärts der Ausgabeöffnung (61) in einem Abstand zur Ausgabeöffnung (61) angeordnet ist.

5.  Ausgabeeinrichtung (100) nach einem der Ansprüche 1-4, wobei der mindestens eine Siebkörper (70A, 70B) zumindest in einem Bereich, in dem die Durchtrittskanäle (71) angeordnet sind, planar ausgebildet oder gekrümmt oder gewölbt ist oder sich entlang der Kontur oder zumindest eines Bereichs der Kontur eines Zylinders, eines Kegels, eines Kegelstumpfs, eines Würfels, eines Quaders oder eines Tetraeders erstreckt.

6.  Ausgabeeinrichtung (100) nach einem der Ansprüche 1-5, wobei die Anzahl der Durchtrittskanäle (71) mindestens 10, bevorzugt 20 bis 300, besonders bevorzugt 25 bis 200, insbesondere 30 bis 160 beträgt.

7. Ausgabeeinrichtung (100) nach einem der Ansprüche 1-6, wobei die Durchtrittskanäle (71) rund, eckig oder maschenförmig ausgestaltet sind.

8. Ausgabeeinrichtung (100) nach einem der Ansprüche 1-7, wobei die Durchtrittskanäle (71) derart angeordnet sind, dass zwei benachbarte Durchtrittskanäle (71) relativ zueinander in einem Abstand von 0.1 bis 1.5 mm, bevorzugt in einem Abstand von 0.1 bis 1.0 mm, insbesondere in einem Abstand von 0.3 bis 0.9 mm, angeordnet sind.

9. Ausgabeeinrichtung (100) nach einem der Ansprüche 1-8, wobei der mindestens eine Siebkörper (70A) einstückig mit dem Ausgabebereich (55) ausgestaltet ist.

10. Ausgabeeinrichtung (100) nach Anspruch 9, wobei der mindestens eine Siebkörper (70A) im Spritzgussverfahren hergestellt ist.

11. Ausgabeeinrichtung (100) nach einem der Ansprüche 1-10, wobei der Querschnitt des mindestens einen Ausgabekanals (62) im Wesentlichen kreisringförmig ist oder die Form eines Segments eines Kreisrings aufweist.

12. Ausgabeeinrichtung (100) nach einem der Ansprüche 1-11, wobei die Siebkörper-Anordnung (70) mindestens zwei Siebkörper (70A, 70B) umfasst.

13. Ausgabeeinrichtung (100) nach Anspruch 12, wobei die mindestens zwei Siebkörper (70A, 70B) bezüglich der Strömungsrichtung des emulgierten Fluids hintereinander angeordnet sind und in Strömungsrichtung des emulgierten Fluids einen Abstand zueinander aufweisen, welcher Abstand im Bereich von 0.1 bis 20 mm, bevorzugt im Bereich von 0.5 bis 10 mm, insbesondere im Bereich von 0.9 bis 5 mm liegt.

14. Ausgabeeinrichtung (100) nach einem der Ansprüche 1-13, wobei der mindestens eine Siebkörper (70A, 70B) angeordnet ist: in der Emulsionskammer (15), an einem von der Ausgabeöffnung (61) abgewandten Ende des mindestens einen Ausgabekanals (62) oder in dem mindestens einen Ausgabekanal (62).

15. Ausgabeeinrichtung (100) nach einem der Ansprüche 1-14, wobei die Emulsionskammer (15) einen ersten Emulsionskammerabschnitt (16), einen zweiten Emulsionskammerabschnitt (17) und einen Verbindungskanal (18), welcher eine Fluidverbindung zwischen dem ersten Emulsionskammerabschnitt (16) und dem zweiten Emulsionskammerabschnitt (17) bildet, umfasst und wobei der erste Emulsionskammerabschnitt (16) an den Fluid-Einlass (15-1) grenzt und der mindestens eine Ausgabekanal (62) im Bereich des zweiten Emulsionskammerabschnitts (17) in die Emulsionskammer (15) mündet.

16. Milchschäumvorrichtung (1), welche umfasst:

eine Ausgabeeinrichtung (100) nach einem der Ansprüche 1-15 und
eine Einrichtung (110) zum Einlassen von Milch, Luft und/oder Dampf in die Emulsionskammer (15) der Ausgabeeinrichtung (100).

## Claims

1. An output device (100) for a milk foaming apparatus (1), wherein the output device comprises:

an emulsifying chamber (15) with a fluid inlet (15-1) for introducing a fluid containing milk, air and/or steam into the emulsifying chamber (15), wherein said fluid emulsifies in the emulsifying chamber (15) so as to form an emulsified fluid in the form of milk foam, and
an output portion (55) with an output opening (61) for dispensing the emulsified fluid from the emulsifying chamber (15), wherein said output portion (55) comprises at least one output channel (62) that is fluidically connected to the emulsifying chamber (15) and the output opening (61) such that the emulsified fluid is enabled to flow from the emulsifying chamber (15) to the output opening (61) through the at least one output channel (62),
wherein a deflecting surface (58) and/or at least one deflecting member (59) for decelerating and swirling the fluid introduced into the emulsifying chamber (15) is furthermore arranged in the output portion (55),
**characterized in that**
a sieve element arrangement (70) with at least one sieve element (70A, 70B) is provided, wherein said sieve element (70A, 70B) comprises multiple passages (71) and is arranged upstream of the output opening (61) such that emulsified fluid flowing from the emulsifying chamber (15) to the output opening (61) has to pass through the at least one sieve element (70A, 70B) via at least one of the passages (71), and **in that**
a hydraulic diameter ($d_h$) of the passages (71) lies in the range between 0.1 and 1.5 mm and a length of the passages (71) lies in the range between 0.1 and 1.5 mm,
wherein the passages (71) of the at least one sieve element (70A, 70B) are arranged in a space that extends annularly around the deflecting surface (58) and/or the at least one deflecting member (59) .

2. The output device (100) according to claim 1, wherein the deflecting surface and/or the at least one deflecting member (59) is arranged in a central region of the output opening (61).

3. The output device (100) according to claim 1 or 2, wherein the ratio of the hydraulic diameter to the length of the passages (71) is greater than 1:1.5, preferably greater than 1:1.25 and less than 4:1, particularly greater than 1:1.25 and less than 3:1.

4. The output device (100) according to one of claims 1-3, wherein the at least one sieve element (70A, 70B) is arranged upstream of the output opening (61) at a distance from the output opening (61).

5. The output device (100) according to one of claims 1-4, wherein the at least one sieve element (70A, 70B) is realized planar or curved or arched or extends along the contour or at least a region of the contour of a cylinder, a cone, a truncated cone, a cube, a cuboid or a tetrahedron at least in a region, in which the passages (71) are arranged.

6. The output device (100) according to one of claims 1-5, wherein the number of passages (71) amounts to at least 10, preferably 20 to 300, particularly 25 to 200, especially 30 to 160.

7. The output device (100) according to one of claims 1-6, wherein the passages (71) are realized round, angular or in a mesh-shaped manner.

8. The output device (100) according to one of claims 1-7, wherein the passages (71) are arranged in such a way that two adjacent passages (71) are spaced apart from one another by a distance between 0.1 and 1.5 mm, preferably a distance between 0.1 and 1.0 mm, particularly a distance between 0.3 and 0.9 mm.

9. The output device (100) according to one of claims 1-8, wherein the at least one sieve element (70A) and the output portion (55) are realized in one piece.

10. The output device (100) according to claim 9, wherein the at least one sieve element (70A) is manufactured by means of an injection molding process.

11. The output device (100) according to one of claims 1-10, wherein the cross section of the at least one output channel (62) is essentially annular or has the shape of a circular ring segment.

12. The output device (100) according to one of claims 1-11, wherein the sieve element arrangement (70) comprises at least two sieve elements (70A, 70B).

13. The output device (100) according to claim 12, wherein the at least two sieve elements (70A, 70B) are arranged behind one another referred to the flow direction of the emulsified fluid and spaced apart from one another by a certain distance in the flow direction of the emulsified fluid, and wherein said distance lies in the range between 0.1 and 20 mm, preferably in the range between 0.5 and 10 mm, particularly in the range between 0.9 and 5 mm.

14. The output device (100) according to one of claims 1-13, wherein the at least one sieve element (70A, 70B) is arranged: in the emulsifying chamber (15) on a far end of the at least one output channel (62) referred to the output opening (61) or in the at least one output channel (62).

15. The output device (100) according to one of claims 1-14, wherein the emulsifying chamber (15) comprises a first emulsifying chamber section (16), a second emulsifying chamber section (17) and a connecting channel (18) that forms a fluidic connection between the first emulsifying chamber section (16) and the second emulsifying chamber section (17), and wherein the first emulsifying chamber section (16) borders on the fluid inlet (15-1) and the at least one output channel (62) leads into the emulsifying chamber (15) in the region of the second emulsifying chamber section (17).

16. A milk foaming apparatus (1), comprising:

an output device (100) according to one of claims 1-15 and
a device (110) for introducing milk, air and/or steam into the emulsifying chamber (15) of the output device (100).

**Revendications**

1. Dispositif de distribution (100), destiné à un émulsionneur de lait (1), le dispositif de distribution comprenant :

une chambre d'émulsion (15), pourvue d'une entrée de fluide (15 à 1), pour faire entrer un fluide contenant du lait, de l'air et/ou de la vapeur dans la chambre d'émulsion (15), lequel fluide s'émulsionnant dans la chambre d'émulsion (15) en un fluide émulsionné sous la forme de mousse de lait ;

une zone de distribution (55), pourvue d'un orifice de distribution (61), pour la distribution du fluide émulsionné à partir de la chambre d'émulsion (15), laquelle zone de distribution (55) comporte au moins un conduit de distribution (62) qui est en liaison fluidique avec la chambre d'émulsion (15) et avec l'orifice de distribution (61), de telle sorte que du fluide émulsionné puisse s'écouler à partir de la chambre d'émulsion (15) à travers l'au moins un conduit de distribution (62) vers l'orifice de distribution (61), dans la zone de distribution (55) étant placé (e) par ailleurs une surface d'impact (58) et/ou au moins un corps d'impact (59), pour freiner et faire tourbillonner le fluide introduit dans la chambre d'émulsion (15),

**caractérisé**

**en ce qu'**un agencement de corps de tamisage (70) pourvu d'au moins un corps de tamisage (70A, 70B) est présent, lequel au moins un corps de tamisage (70A, 70B) comprend plusieurs conduits de passage (71) et est placé en amont de l'orifice de distribution (61), de sorte que du fluide émulsionné s'écoulant de la chambre d'émulsion (15) vers l'orifice de distribution (61) doive passer l'au moins un corps de tamisage (70A, 70B) via au moins l'un des conduits de passage (71), et

**en ce qu'**un diamètre hydraulique ($d_h$) des conduits de passage (71) se situe dans la fourchette de 0.1 à 1.5 mm et une longueur des conduits de passage (71) se situe dans la fourchette de 0.1 à 1.5 mm,

les conduits de passage (71) de l'au moins un corps de tamisage (70A, 70B) étant placés dans une zone spatiale, laquelle s'étend sous forme annulaire autour de la surface d'impact (58) et/ou de l'au moins un corps d'impact (59).

**2.** Dispositif de distribution (100) selon la revendication 1, la surface d'impact et/ou l'au moins un corps d'impact (59) étant placé dans une zone centrale de l'orifice de distribution (61).

**3.** Dispositif de distribution (100) selon la revendication 1 ou 2, le rapport du diamètre hydraulique à la longueur des conduits de passage (71) étant supérieur à 1:1.5, de préférence supérieur à 1:1 et inférieur à 4:1, notamment supérieur à 1:1.25 et inférieur à 3:1.

**4.** Dispositif de distribution (100) selon l'une quelconque des revendications 1 à 3, l'au moins un corps de tamisage (70A, 70B) étant placé en amont de l'orifice de distribution (61), avec un écart par rapport à l'orifice de distribution (61).

**5.** Dispositif de distribution (100) selon l'une quelconque des revendications 1 à 4, au moins dans une zone dans laquelle sont placés les conduits de passage (71), l'au moins un corps de tamisage (70A, 70B) étant conçu de forme planaire ou curviligne ou bombée ou s'étendant le long du contour ou d'au moins une zone du contour d'un cylindre, d'un cône, d'un tronc de cône, d'un dé, d'un parallélépipède ou d'un tétraèdre.

**6.** Dispositif de distribution (100) selon l'une quelconque des revendications 1 à 5, le nombre des conduits de passage (71) étant d'au moins 10, de préférence de 20 à 300, de manière particulièrement préférentielle, de 25 à 200, notamment de 30 à 160.

**7.** Dispositif de distribution (100) selon l'une quelconque des revendications 1 à 6, les conduits de passage (71) étant conçus de forme ronde, angulaire ou en forme de maillage.

**8.** Dispositif de distribution (100) selon l'une quelconque des revendications 1 à 7, les conduits de passage (71) étant placés de telle sorte que deux conduits de passage (71) voisins soient placés l'un par rapport à l'autre avec un écart de 0.1 à 1.5 mm, de préférence avec un écart de 0.1 à 1.0 mm, notamment avec un écart de 0.3 à 0.9 mm.

**9.** Dispositif de distribution (100) selon l'une quelconque des revendications 1 à 8, l'au moins un corps de tamisage (70A) étant conçu en monobloc avec la zone de distribution (55).

**10.** Dispositif de distribution (100) selon la revendication 9, l'au moins un corps de tamisage (70A) étant fabriqué par procédé de moulage par injection.

**11.** Dispositif de distribution (100) selon l'une quelconque des revendications 1 à 10, la section transversale de l'au moins un conduit de distribution (62) étant sensiblement de forme annulaire circulaire ou présentant la forme d'un segment d'un anneau circulaire.

**12.** Dispositif de distribution (100) selon l'une quelconque des revendications 1 à 11, l'agencement de corps de tamisage (70) comprenant au moins deux corps de tamisage (70A, 70B).

**13.** Dispositif de distribution (100) selon la revendication 12, les au moins deux corps de tamisage (70A, 70B) étant placés l'un derrière l'autre, par rapport à la direction d'écoulement du fluide, et présentant dans la direction d'écoulement du fluide émulsionné un écart réciproque, lequel écart se situe dans la fourchette de 0.1 à 20 mm, de préférence dans la fourchette de 0.5 à 10 mm, notamment dans la fourchette de 0.9 à 5 mm.

**14.** Dispositif de distribution (100) selon l'une quelconque des revendications 1 à 13, l'au moins un corps de tamisage (70A, 70B) étant placé : dans la chambre d'émulsion (15), sur une extrémité opposée à l'orifice de distribution (61) de l'au moins un conduit de distribution (62) ou dans l'au moins un conduit de distribution (62).

**15.** Dispositif de distribution (100) selon l'une quelconque des revendications 1 à 14, la chambre d'émulsion (15) comprenant un premier segment de chambre d'émulsion (16), un second segment de chambre d'émulsion (17) et un conduit de liaison (18), lequel forme une liaison fluidique entre le premier segment de chambre d'émulsion (16) et le second segment de chambre d'émulsion (17), et
le premier segment de chambre d'émulsion (16) jouxtant l'entrée de fluide (15-1) et dans la zone du second segment de chambre d'émulsion (17), l'au moins un conduit de distribution (62) débouchant dans la chambre d'émulsion (15).

**16.** Emulsionneur de lait (1), lequel comprend :

un dispositif de distribution (100) selon l'une quelconque des revendications 1 à 15 et
un dispositif (110) destiné à faire entrer du lait, de l'air et/ou de la vapeur dans la chambre d'émulsion (15) du dispositif de distribution (100).

Fig. 1

Fig. 2A

Fig. 2B

Fig. 2C

LA

160

90

18

55

62    61    59    62

10

100

16, 15

11

17, 15

58

70A

70

11B

70B

61A

Fig. 3

Fig. 4A

Fig. 4B

Fig. 4C

110

160

90

55

16, 15

10

90

100

18

17, 15

70, 70A

50A

11

62

61A

11B

61.1

71

61

71

59

LA

Fig. 5

LA

70, 70A

11

50

11A

71

58

Fig. 6A

11

70, 70A

61.1

61

62

71

11B

59

Fig. 6B

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202006009786 U1
- US 2009285955 A1
- EP 2397219 A2